# EUROPEAN PATENT APPLICATION

(11) **EP 4 692 011 A1**
(43) Date of publication of application: **11.02.2026**
(21) Application number: 24780323.2
(22) Date of filing: 26.03.2024
(51) Int. Cl.: C03C 17/30, B32B 17/10, B32B 27/00, F24C 15/10, G01B 11/28, H05B 6/12

(54) **TOP PLATE FOR COOKING DEVICE, PRODUCTION METHOD THEREFOR, AND METHOD FOR ASSESSING CHARRING**

(30) Priority: 29.03.2023 JP 2023053573; 29.03.2023 JP 2023053574; 29.11.2023 JP 2023201935
(71) Applicant: Nippon Electric Glass Co., Ltd., Otsu-shi, Shiga 520-8639 (JP)
(72) Inventor: KAJIOKA, Toshiyuki, Otsu-shi, Shiga 520-8639 (JP)
(74) Representative: Tetzner, Michael
(86) International application number: PCT/JP2024/011978
(87) International publication number: WO 2024/204213

(57) **Abstract**

Provided is a cooker top plate that enables, upon occurrence of char sticking to a cooking surface due to such factors as spilling of foods, easy removal of the sticking char and has excellent hardness on the cooking surface side. A cooker top plate 1 includes: a glass substrate 2; and a coating film 3 that is provided on a principal surface of the glass substrate 2 and contains an organo-polysiloxane having a trifunctional siloxane unit represented by formula (1) below, wherein the coating film 3 has a three-dimensional cross-linked structure containing a siloxane bond and has a thickness of not more than 100 nm. 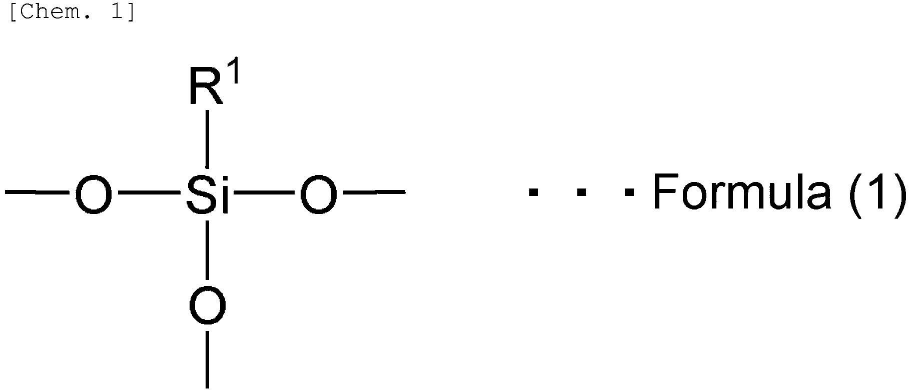 in the formula (1), R¹ represents an alkyl group having 1 to 6 carbon atoms, a phenyl group or a vinyl group.

## Description

### [Technical Field]

The present invention relates to cooker top plates, methods for producing cooker top plates, and char sticking evaluation methods.

### [Background Art]

A cooker top plate is provided on the top of an electromagnetic cooker, a radiant heater cooker, a gas cooker or the like. For the cooker top plate, a glass substrate is used which has: a surface on the side toward a cooking surface on which a cooking utensil is to be placed; and a reverse side on the side opposite to the cooking surface.

Patent Literature 1 below discloses a cooker top plate in which a crystallized glass substrate consisting primarily of Li₂O-Al₂O₃-SiO₂ and containing a transition metal is used. In the cooker top plate disclosed in Patent Literature 1, the crystallized glass substrate is provided at the reverse side (the back side) with a lightness enhancement layer and a substrate color improvement layer, but not provided at the cooking surface side with any film.

Meanwhile, Patent Literature 2 below discloses a top plate being for use in a cooking device, having a substrate made of a crystallized glass, and having a cooking surface on which an object to be heated is to be placed. The cooking surface of the top plate for a cooking device in Patent Literature 2 has a surface structure in which fluorine is present.

Patent Literature 3 below discloses a cooker top plate including a substrate: and a coating layer with a pillar structure formed on one surface of the substrate and composed of a plurality of pillars made of zirconium oxide. In Patent Literature 3, each of samples of the cooker top plate made in a working example and comparative examples was subjected to a sticking char removal test. In doing the sticking char removal test, a commercially available grilled meat sauce was poured on each of the samples of the cooker top plate and fired at 150°C for 30 minutes, thus making a sample for evaluation. Then, the sticking char removal test was conducted by immersing a half of the sample into water for five minutes and, thereafter, pressing and rubbing a wood stick against the sample 50 times at a force of 10 kg/cm². In Patent Literature 3, a cooker top plate from which sticking char, even if produced, could be easily removed is distinguished through the sticking char removal test as just described.

### [Citation List]

### [Patent Literature]

[PTL 1]
   JP-A-2021-178774
[PTL 2]
   JP-A-H09-132428
[PTL 3]
   JP-A-2011-196667

### [Summary of Invention]

### [Technical Problem]

However, in the case where, as in the cooker top plate disclosed in Patent Literature 1, the surface of the glass substrate serves as a cooking surface, foods spilled thereon during heating, such as when cooking ingredients in a cooking utensil boil over, may char and stick to the cooking surface. In this case, there is a problem of difficulty in removing the char sticking to the cooking surface. In the method of rubbing off the char and observing how the char is removed as in the sticking char removal test disclosed in Patent Literature 3, it is difficult to objectively evaluate the removability of sticking char.

Furthermore, even when char could be rubbed off under certain conditions, there arises a problem that the evaluation of how the char has been removed varies depending on the evaluator. On the other hand, in the case where, as in the cooker top plate disclosed in Patent Literature 2, a fluorine-containing coating film is provided on the glass substrate and the surface of the coating film serves as a cooking surface, the coating film provided to form the cooking surface and a cooking utensil, such as a pan, rub against each other, which may cause the coating film to be scratched or peeled off. In view of the above, there is a demand for a cooker top plate enabling easy removal of char sticking to a cooking surface and having excellent hardness on the cooking surface side.

An object of the present invention is to provide: a cooker top plate that enables, upon occurrence of char sticking to a cooking surface due to such factors as spilling of foods, easy removal of the sticking char and has excellent hardness on the cooking surface side; and a method for producing the cooker top plate. Another object of the present invention is to provide a char sticking evaluation method according to which the removability of sticking char on a plate-shaped material, such as a cooker top plate, can be reliably evaluated with less variation depending on the evaluator.

### [Solution to Problem]

A description will be given of aspects of a cooker top plate and a method for producing the cooker top plate, which can solve the above problem.

A cooker top plate of aspect 1 in the present invention includes a glass substrate and a coating film that is provided on a principal surface of the glass substrate and contains an organo-polysiloxane having a trifunctional siloxane unit represented by formula (1) below, wherein the coating film has a three-dimensional cross-linked structure containing a siloxane bond and a thickness of not more than 100 nm. 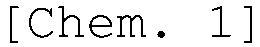 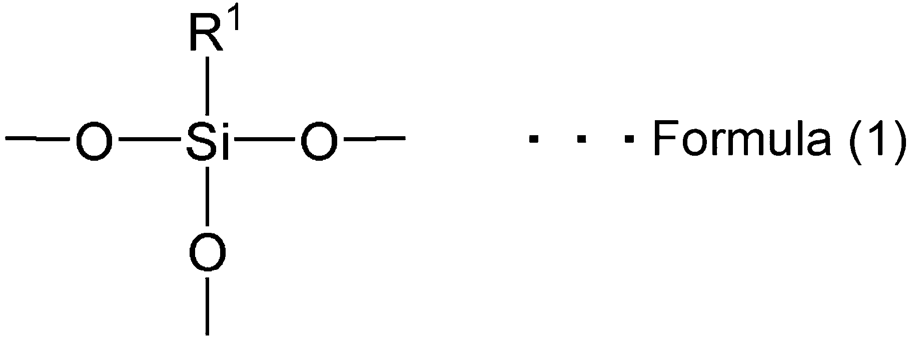 (in the formula (1), R¹ represents an alkyl group having 1 to 6 carbon atoms, a phenyl group or a vinyl group).

A cooker top plate of aspect 2 is the cooker top plate according to aspect 1, wherein a surface of the coating film preferably has an arithmetic mean height Sa of not less than 0.4 nm and not more than 10 nm measured with a size of a measurement view field of 316.77 µm × 237. 72 µm and a resolution of 640 pixels × 480 pixels.

A cooker top plate of aspect 3 is the cooker top plate according to aspect 1 or 2, wherein a water contact angle of a surface of the coating film is preferably not less than 80 degrees.

A cooker top plate of aspect 4 is the cooker top plate according to any one of aspects 1 to 3, wherein the glass substrate is preferably made of a borosilicate glass or a low-expansion crystallized glass.

A cooker top plate of aspect 5 is the cooker top plate according to any one of aspects 1 to 4, wherein the glass substrate preferably has an average coefficient of linear thermal expansion of not more than 40 × 10⁻⁷/°C at 30°C to 380°C.

A cooker top plate of aspect 6 is the cooker top plate according to any one of aspects 1 to 5, wherein the coating film preferably contains a hydrolytic condensate of a trifunctional alkoxide represented by the following formula (2): 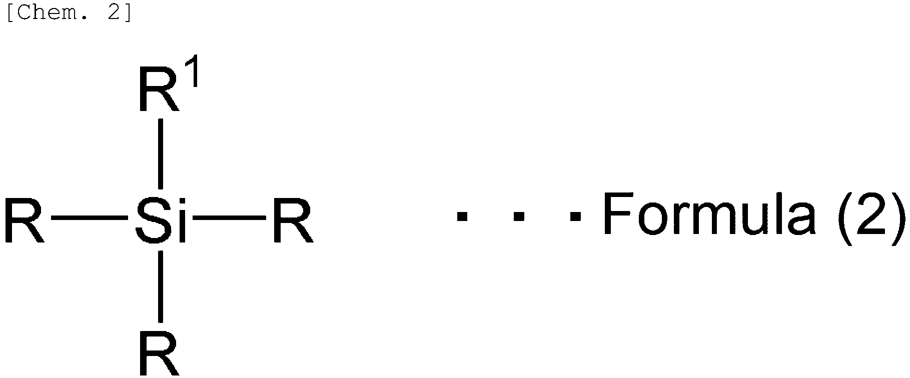 (in the formula (2), R¹ represents an alkyl group having 1 to 6 carbon atoms, a phenyl group or a vinyl group and R represents an alkoxy group).

A cooker top plate of aspect 7 is the cooker top plate according to aspect 6, wherein the R¹ of a compound represented by the formula (2) is preferably a methyl group.

A cooker top plate of aspect 8 is the cooker top plate according to any one of aspects 1 to 7, wherein a pencil hardness of the cooker top plate measured from a side thereof having the coating film is preferably not less than 9H.

A cooker top plate of aspect 9 is the cooker top plate according to any one of aspects 1 to 8, wherein when a sample for char sticking evaluation is made by dropping an evaluation liquid onto a surface of the coating film and heating the liquid and an image of the sample for char sticking evaluation is taken from a side of the glass substrate opposite to the coating film, an area ratio of a char sticking portion determined from the taken image is preferably not more than 70%.

A cooker top plate of aspect 10 is the cooker top plate according to any one of aspects 1 to 9, wherein when the cooker top plate undergoes a heat resistance test under conditions at a temperature of 350°C for 24 hours, a change in water contact angle of a surface of the coating film between before and after the heat resistance test is preferably less than three degrees.

A cooker top plate of aspect 11 is the cooker top plate according to any one of aspects 1 to 10, wherein a surface of the cooker top plate located on a side thereof having the coating film is preferably a cooking surface on which a cooking utensil is to be placed.

A cooker top plate of aspect 12 is the cooker top plate according to any one of aspects 1 to 11, wherein a printed layer having a pattern may be provided on the principal surface of the glass substrate and the coating film may be provided to cover the printed layer on the principal surface of the glass substrate.

A cooker top plate of aspect 13 is the cooker top plate according to aspect 12, wherein the pattern is preferably a dotted, grid, striped or ring-shaped pattern.

A method for producing a cooker top plate of aspect 14 in the present invention is a method for producing a cooker top plate including a glass substrate and a coating film provided on a principal surface of the glass substrate and includes the steps of: applying, to the principal surface of the glass substrate, a coating liquid containing a compound represented by formula (2) below or a hydrolytic condensate in which at least part of the compound is hydrolyzed and condensed; and firing at a temperature of not lower than 200°C the glass substrate having the coating liquid applied thereto, thus forming the coating film on the principal surface of the glass substrate. 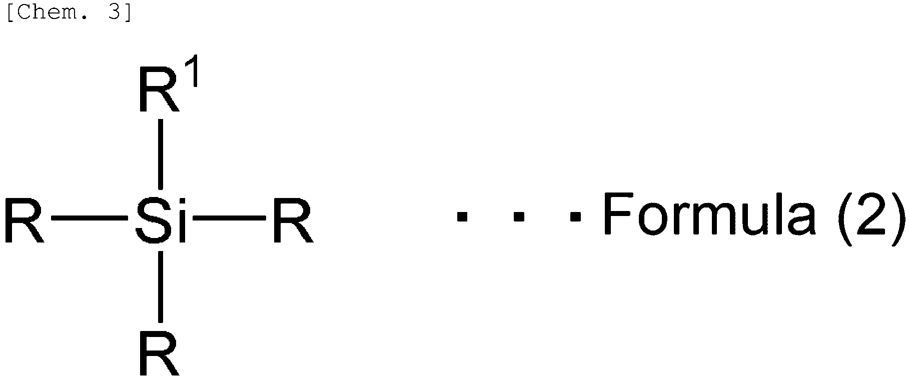 (in the formula (2), R¹ represents an alkyl group having 1 to 6 carbon atoms, a phenyl group or a vinyl group and R represents an alkoxy group).

A method for producing a cooker top plate of aspect 15 is the method for producing a cooker top plate according to aspect 14, wherein the R¹ of the compound represented by the formula (2) is preferably a methyl group.

A char sticking evaluation method of aspect 16 in the present invention is a method for evaluating removability of sticking char on a plate-shaped material and includes: a sample making step of preparing a plate-shaped material having a first principal surface and a second principal surface opposed to each other and making a sample for char sticking evaluation on the first principal surface of the plate-shaped material; and an evaluation step of evaluating removability of sticking char of the sample for char sticking evaluation from a side of the plate-shaped material where the second principal surface is located.

A char sticking evaluation method of aspect 17 is the char sticking evaluation method according to aspect 16, wherein the evaluation step preferably includes: an imaging step of taking an image of the sample for char sticking evaluation from the side of the plate-shaped material where the second principal surface is located; and a measurement step of measuring, from the image taken in the imaging step, an area of at least one of a char sticking portion and a char non-sticking portion of the sample for char sticking evaluation.

A char sticking evaluation method of aspect 18 is the char sticking evaluation method according to aspect 16 or 17, wherein in the sample making step the sample for char sticking evaluation may be made on the first principal surface of the plate-shaped material by dropping an evaluation liquid onto the first principal surface of the plate-shaped material and heating the plate-shaped material with the evaluation liquid dropped thereon.

A char sticking evaluation method of aspect 19 is the char sticking evaluation method according to aspect 17 or 18, wherein in the imaging step the image of the sample for char sticking evaluation may be taken from the side of the plate-shaped material where the second principal surface is located by bright-field illumination method.

A char sticking evaluation method of aspect 20 is the char sticking evaluation method according to any one of aspects 17 to 19, wherein in the measurement step an area of an entire region where the sample for char sticking evaluation is provided may be measured from the image taken in the imaging step.

A char sticking evaluation method of aspect 21 is the char sticking evaluation method according to any one of aspects 18 to 20, wherein in the sample making step, before heating the plate-shaped material after dropping the evaluation liquid onto the plate-shaped material, an area of an entire region where the sample for char sticking evaluation is provided may be measured by measuring an area of the evaluation liquid dropped.

A char sticking evaluation method of aspect 22 is the char sticking evaluation method according to any one of aspects 17 to 21, wherein in the measurement step a char sticking area ratio may be determined as a ratio of the area of the char sticking portion to an area of an entire region where the sample for char sticking evaluation is provided.

A char sticking evaluation method of aspect 23 is the char sticking evaluation method according to aspect 22, wherein in the measurement step whether the plate-shaped material is a non-defective product or a defective product may be determined from the char sticking area ratio.

A cooker top plate of aspect 24 in the present invention has a char sticking area ratio of not more than 70% determined by the char sticking evaluation method according to any one of aspects 16 to 23.

### [Advantageous Effects of Invention]

The present invention enables provision of: a cooker top plate that enables, upon occurrence of char sticking to a cooking surface due to such factors as spilling of foods, easy removal of the sticking char and has excellent hardness on the cooking surface side; and a method for producing the cooker top plate. Furthermore, the present invention enables provision of a char sticking evaluation method according to which the removability of sticking char on a plate-shaped material, such as a cooker top plate, can be reliably evaluated with less variation depending on the evaluator.

### [Brief Description of Drawings]

[Fig. 1]

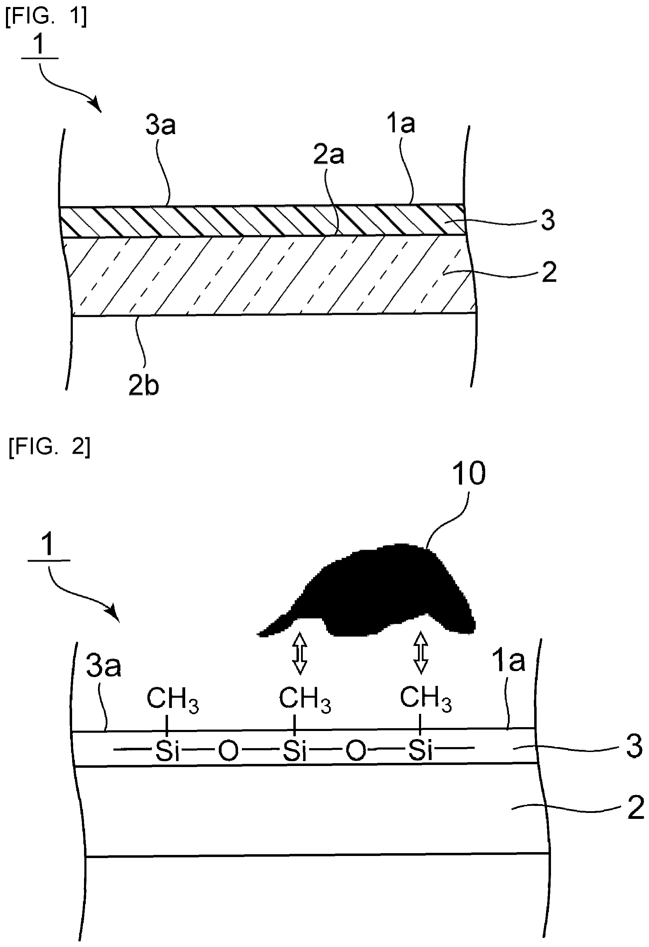

   Fig. 1 is a schematic cross-sectional view showing a cooker top plate according to a first embodiment of the present invention.
[Fig. 2]
   Fig. 2 is a schematic view for illustrating a surface state of a cooking surface of the cooker top plate according to the first embodiment of the present invention.
[Fig. 3]

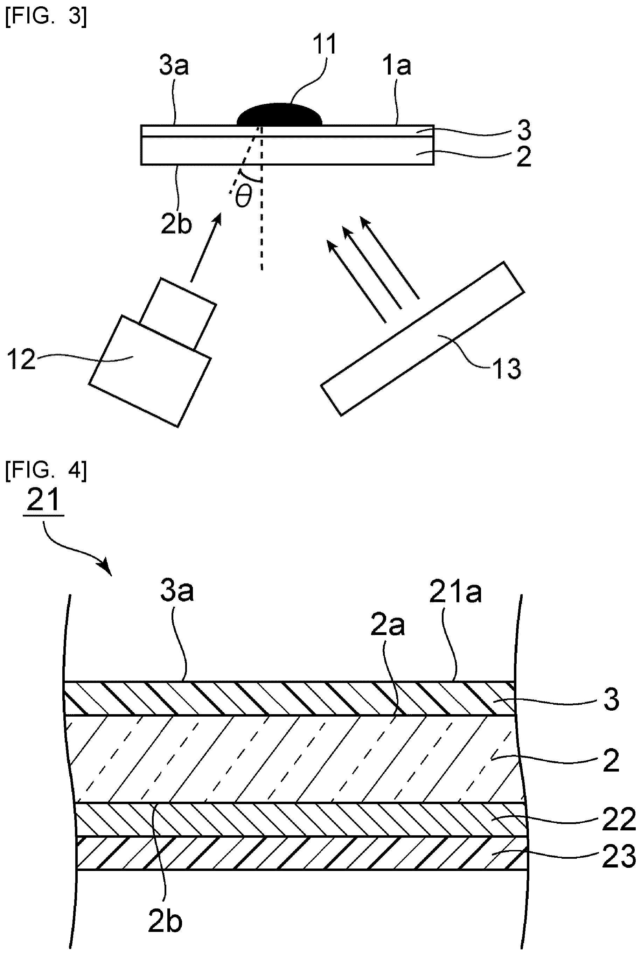

   Fig. 3 is a view for illustrating a method for evaluating a char sticking area ratio.
[Fig. 4]
   Fig. 4 is a schematic cross-sectional view showing a cooker top plate according to a second embodiment of the present invention.
[Fig. 5]

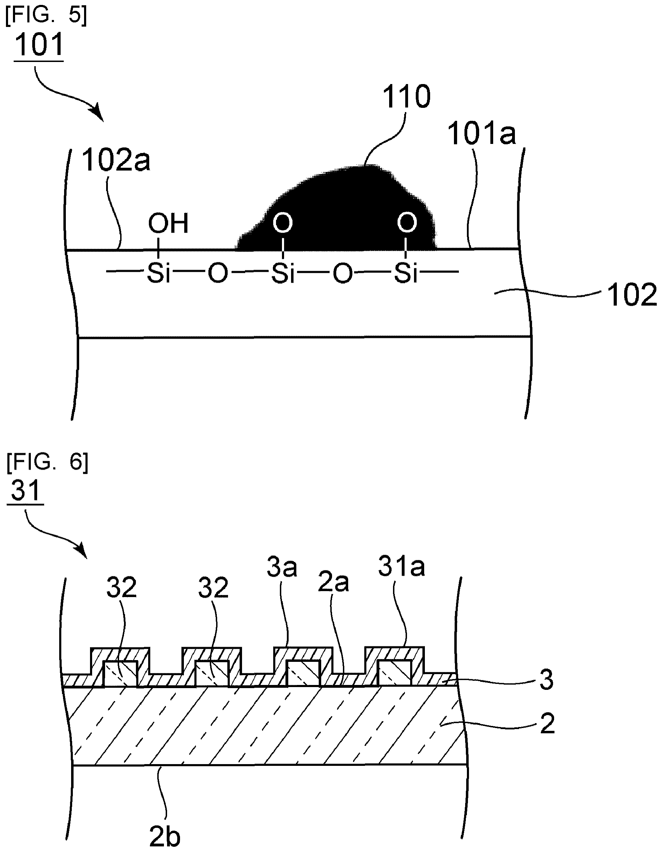

   Fig. 5 is a schematic view for illustrating a surface state of a cooking surface of a cooker top plate as a comparative example.
[Fig. 6]
   Fig. 6 is a schematic cross-sectional view showing a cooker top plate according to a third embodiment of the present invention.
[Fig. 7]

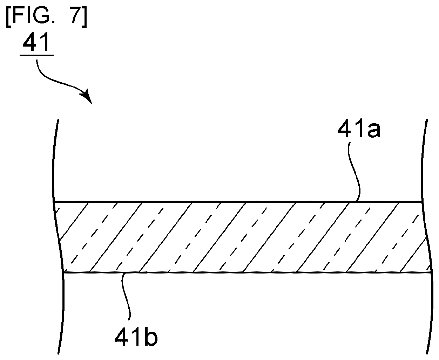

   Fig. 7 is a schematic cross-sectional view for illustrating a plate-shaped material as an example for use in a char sticking evaluation method according to a fourth embodiment of the present invention.
[Fig. 8]

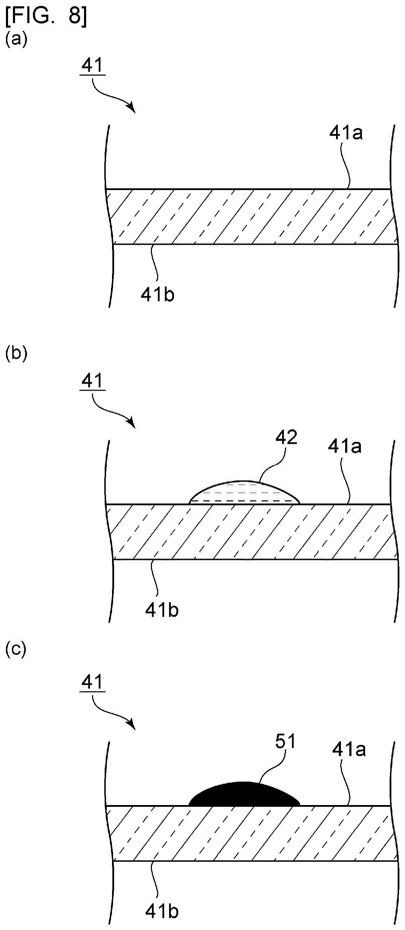

   Figs. 8(a) to 8(c) are schematic cross-sectional views for illustrating a sample making step in the char sticking evaluation method according to the fourth embodiment of the present invention.
[Fig. 9]

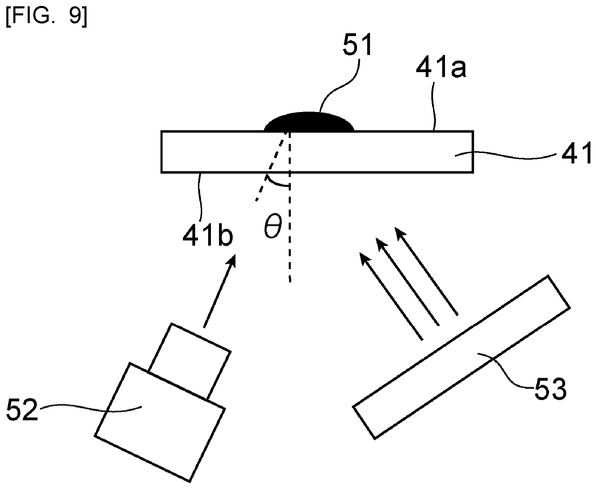

   Fig. 9 is a schematic cross-sectional view for illustrating an imaging step in the char sticking evaluation method according to the fourth embodiment of the present invention.
[Fig. 10]

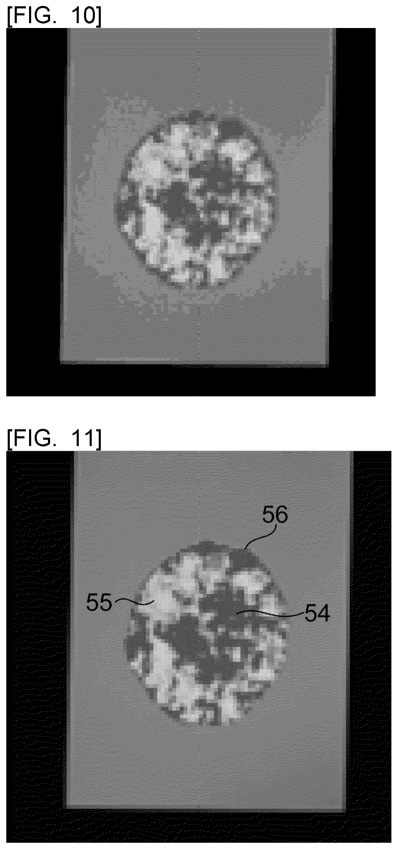

   Fig. 10 shows an example of a photograph taken in the imaging step of the char sticking evaluation method according to the fourth embodiment of the present invention.
[Fig. 11]
   Fig. 11 is a view for illustrating a method for measuring the area of char sticking portions and the area of char non-sticking portions in the photograph of Fig. 10.
[Fig. 12]

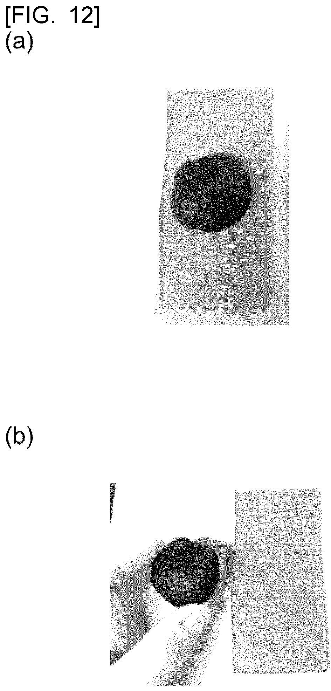

   Figs. 12(a) and 12(b) are photographs for checking the non-stick effect in Example 22.
[Fig. 13]

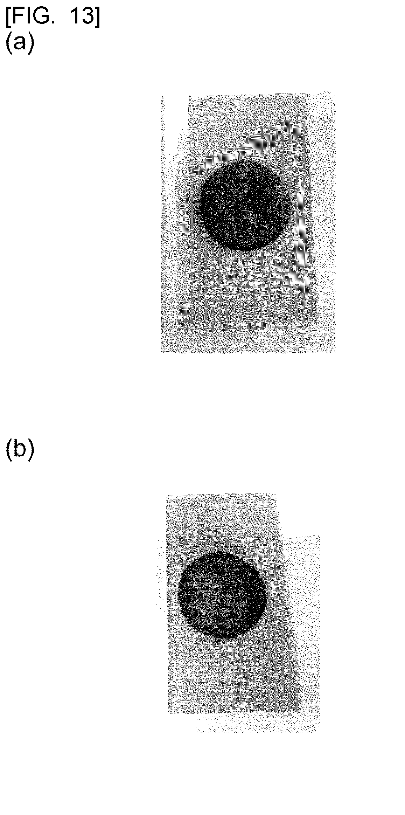

   Figs. 13(a) and 13(b) are photographs for checking the non-stick effect in Comparative Example 9.

### [Description of Embodiments]

Hereinafter, a description will be given of preferred embodiments. However, the following embodiments are merely illustrative and the present invention is not limited to the following embodiments.

### [First Embodiment]

### (Cooker Top Plate)

Fig. 1 is a schematic cross-sectional view showing a cooker top plate according to a first embodiment of the present invention. As shown in Fig. 1, a cooker top plate 1 (hereinafter, a "cooker top plate" may be described simply as a "top plate") includes a glass substrate 2. The glass substrate 2 has a surface 2a and a reverse side 2b opposed to each other. The surface 2a is a principal surface of the glass substrate located close to a cooking surface 1a where a cooking utensil, such as a pot or a frying pan, is to be placed. The reverse side 2b is a principal surface of the glass substrate located toward the interior of the cooker and facing a light source and a heater. Therefore, the surface 2a and the reverse side 2b are top and under sides of the same substrate.

The glass substrate 2 preferably has an average transmittance of not less than 20% in a wavelength range of 700 nm to 3000 nm. Thus, the top plate 1 can be easily increased in heating performance when used in an IH cooking heater, a radiant heater or the like. Furthermore, the average transmittance of the glass substrate 2 in a wavelength range of 700 nm to 3000 nm is more preferably not less than 30%, even more preferably not less than 40%, and particularly preferably not less than 50%. The upper limit of the average transmittance of the glass substrate 2 in a wavelength range of 700 nm to 3000 nm is not particularly limited, but may be, for example, not more than 90% or not more than 80%.

Furthermore, the glass substrate 2 may transmit light in at least a part of a wavelength range of 400 nm to 700 nm. The glass substrate 2 may be clear and colored in a visible range, but is preferably clear and colorless in a visible range from the viewpoint of further increasing the aesthetic appearance of the top plate 1. Herein, "clear in a visible range" means that the light transmittance in a visible wavelength range of 400 nm to 700 nm is not less than 70%.

The top plate 1 undergoes heating and cooling repeatedly. Therefore, the glass substrate 2 preferably has high heat resistance and a low coefficient of thermal expansion. Specifically, the softening temperature of the glass substrate 2 is preferably not lower than 700°C, more preferably not lower than 750°C, even more preferably not lower than 800°C, and particularly preferably not lower than 850°C. Furthermore, the average coefficient of linear thermal expansion of the glass substrate 2 at 30°C to 380°C is preferably not less than -10 × 10⁻⁷/°C, more preferably not less than -8 × 10⁻⁷/°C, even more preferably not less than -5 × 10⁻⁷/°C, preferably not more than 50 × 10⁻⁷/°C, more preferably not more than 45 × 10⁻⁷/°C, even more preferably not more than 40 × 10⁻⁷/°C, still even more preferably not more than 35 × 10⁻⁷/°C, yet still even more preferably not more than 30 × 10⁻⁷/°C, further preferably not more than 25 × 10⁻⁷/°C, even further preferably not more than 20 × 10⁻⁷/°C, still even further preferably not more than 15 × 10⁻⁷/°C, and particularly preferably not more than 10 × 10⁻⁷/°C. Therefore, the glass substrate 2 is preferably made of a glass having a high glass transition temperature and low expansibility or a crystallized glass having low expansibility (a low-expansion crystallized glass). A specific example of the low-expansion crystallized glass is "N-0" manufactured by Nippon Electric Glass Co., Ltd. In this case, the heat resistance and the thermal shock resistance of the top plate 1 can be easily increased. A borosilicate glass or the like may be used as the glass substrate 2 or, alternatively, an alkali-free glass, an aluminosilicate glass or the like may be used. In this case, the cost can be reduced. Furthermore, in this case, a clear glass can be easily obtained.

The thickness of the glass substrate 2 is not particularly limited. The thickness of the glass substrate 2 can be appropriately selected according to the light transmittance and so on. The thickness of the glass substrate 2 may be, for example, about 2 mm to about 6 mm.

The surface 2a of the glass substrate 2 is preferably smooth and is more preferably an unpolished surface (a fire finished surface). The arithmetic mean height Sa of the surface 2a of the glass substrate 2 is preferably not more than 0.5 nm, more preferably not more than 0.4 nm, and even more preferably not more than 0.3 nm. The lower limit of the arithmetic mean height Sa of the surface 2a of the glass substrate 2 is not limited, but may be not less than 0.1 nm. When the arithmetic mean height Sa of the surface 2a of the glass substrate 2 is not more than the above upper limit, the thickness of the coating film 3 and the arithmetic mean height Sa of the surface 3a of the coating film 3 can be easily adjusted. Furthermore, the glass substrate can obtain less cloudy, high-quality appearance.

The arithmetic mean height Sa is a parameter defined in ISO 25178. In this embodiment, the arithmetic mean height Sa can be measured with a size of a measurement view field of 316.77 µm × 237. 72 µm and a resolution of 640 pixels × 480 pixels.

The coating film 3 is provided on the surface 2a of the glass substrate 2. The coating film 3 contains an organo-polysiloxane having trifunctional siloxane units represented by formula (1) below. Furthermore, the coating film 3 has a three-dimensional cross-linked structure containing siloxane bonds. The thickness of the coating film 3 is not more than 100 nm.

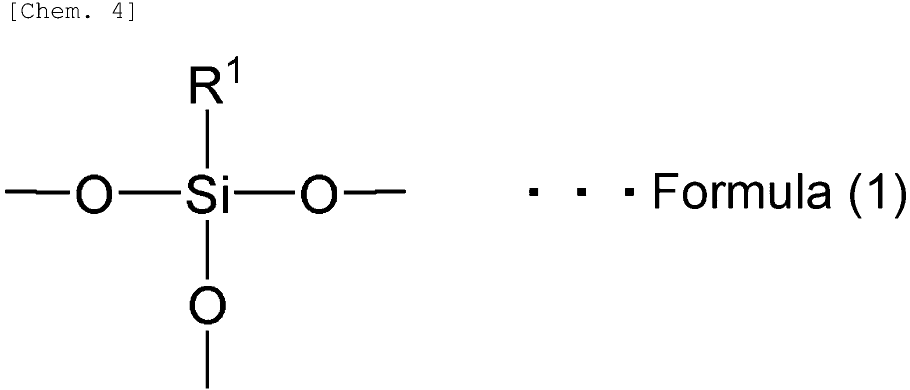

In the formula (1), R¹ represents an alkyl group having 1 to 6 carbon atoms, a phenyl group or a vinyl group. R¹ is preferably an alkyl group having 1 to 6 carbon atoms or a phenyl group. In this case, when char sticks to the cooking surface 1a, the sticking char can be more easily removed. Furthermore, in the formula (1), R¹ is more preferably a methyl group, an ethyl group, an n-propyl group, an isopropyl group, an n-butyl group, an isobutyl group, a sec-butyl group, a tert-butyl group, a pentyl group, a hexyl group or a phenyl group, and even more preferably a methyl group or a phenyl group. Particularly, a methyl group or a phenyl group is preferred because they have excellent heat resistance.

The organo-polysiloxane is preferably a hydrolytic condensate of a trifunctional alkoxide represented by the following formula (2).

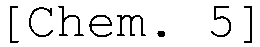

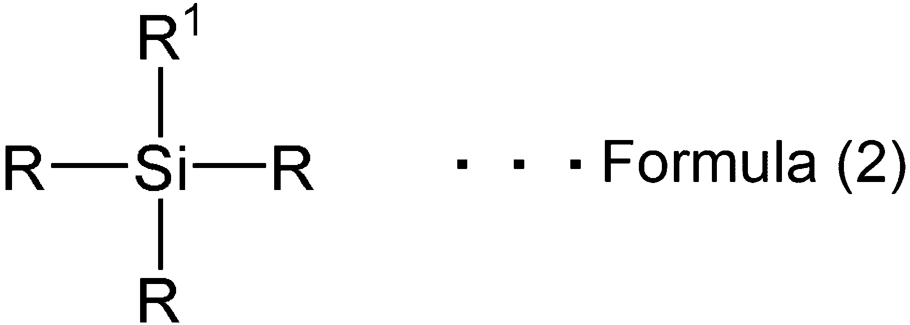

In the formula (2), R¹ represents an alkyl group having 1 to 6 carbon atoms, a phenyl group or a vinyl group and R represents an alkoxy group. R¹ above is preferably an alkyl group having 1 to 6 carbon atoms or a phenyl group. In this case, when char sticks to the cooking surface 1a, the sticking char can be more easily removed. Furthermore, in the formula (2), R¹ is more preferably a methyl group, an ethyl group, an n-propyl group, an isopropyl group, an n-butyl group, an isobutyl group, a sec-butyl group, a tert-butyl group, a pentyl group, a hexyl group or a phenyl group, and even more preferably a methyl group or a phenyl group. Particularly, a methyl group or a phenyl group is preferred because they have excellent heat resistance. R is preferably a methoxy group, an ethoxy group, a propoxy group, a butoxy group, a pentoxy group or a hexoxy group, and more preferably a methoxy group or an ethoxy group.

Examples of the trifunctional alkoxide include methyltrimethoxysilane, methyltriethoxysilane, methyltri(n-propoxy)silane, methyltri(i-propoxy)silane, methyltri(n-butoxy)silane, methyl(n-pentoxy)silane, methyl(n-hexoxy)silane, methyltri(phenoxy)silane, ethyltrimethoxysilane, ethyltriethoxysilane, ethyltri(n-propoxy)silane, ethyltri(i-propoxy)silane, ethyltri(n-butoxy)silane, ethyltri(n-pentoxy)silane, ethyl(n-hexoxy)silane, ethyltriphenoxysilane, n-propyltrimethoxysilane, n-propyltriethoxysilane, n-propyltri(n-propoxy)silane, n-propyltri(i-propoxy)silane, i-propyltrimethoxysilane, i-propyltriethoxysilane, i-propyltri(n-propoxy)silane, i-propyltri(i-propoxy)silane, n-butyltrimethoxysilane, n-butyltriethoxysilane, n-butyltri(n-propoxy)silane, n-butyltri(i-propoxy)silane, n-butyltri(n-butoxy)silane, n-pentyltrimethoxysilane, n-pentyltriethoxysilane, n-pentyltri(n-propoxy)silane, n-pentyltri(i-propoxy)silane, n-pentyltri(n-butoxy)silane, n-pentyltri(n-pentoxy)silane, cyclopentyltrimethoxysilane, cyclopentyltriethoxysilane, cyclopentyl(n-propoxy)silane, cyclopentyl(i-propoxy)silane, cyclopentyltri(n-butoxy)silane, cyclopentyltri(n-pentoxy)silane, cyclopentyltri(cyclopentoxy)silane, n-hexyltrimethoxysilane, n-hexyltriethoxysilane, n-hexyltri(n-propoxy)silane, n-hexyltri(i-propoxy)silane, n-hexyltri(n-butoxy)silane, n-hexyltri(n-pentoxy)silane, n-hexyltri(n-hexoxy)silane, cyclohexyltrimethoxysilane, cyclohexyltriethoxysilane, cyclohexyltri(n-propoxy)silane, cyclohexyltri(n-butoxy)silane, cyclohexyltri(n-pentoxy)silane, cyclohexyltri(n-hexoxy)silane, cyclohexyltri(cyclohexoxy)silane, phenyltrimethoxysilane, phenyltriethoxysilane, phenyltri(n-propoxy)silane, phenyltri(n-butoxy)silane, phenyltri(n-pentoxy)silane, phenyltri(n-hexoxy)silane, phenyltri(phenoxy)silane, vinyltrimethoxysilane, vinyltriethoxysilane, vinyltri(n-propoxy)silane, vinyltri(i-propoxy)silane, vinyltri(n-butoxy)silane, vinyl(n-pentoxy)silane, vinyl(n-hexoxy) silane, and vinyltri(phenoxy) silane. The trifunctional alkoxide is preferably methyltrimethoxysilane, methyltriethoxysilane, phenyltrimethoxysilane, phenyltriethoxysilane, vinyltrimethoxysilane or vinyltriethoxysilane, more preferably methyltrimethoxysilane, methyltriethoxysilane, phenyltrimethoxysilane or phenyltriethoxysilane, and even more preferably methyltriethoxysilane.

The top plate 1 according to this embodiment has the above structure and, therefore, upon occurrence of char sticking to the cooking surface 1a due to such factors as spilling of foods, enables easy removal of the sticking char and has excellent hardness on the cooking surface 1a side.

Conventionally, in the case where, in a top plate, the surface of the glass substrate serves as a cooking surface, foods spilled thereon during heating, such as when cooking ingredients in a cooking utensil boil over, may char and stick to the cooking surface. In this case, there is a problem of difficulty in removing the char sticking to the cooking surface. Meanwhile, in the case where a coating film is provided on the glass substrate and the surface of the coating film serves as a cooking surface, the coating film provided to form the cooking surface and a cooking utensil, such as a pan, rub against each other, which may cause the coating film to be scratched or peeled off.

To cope with the above problems, the inventor focused on the coating film 3 provided on the surface 2a of the glass substrate 2 and found that, with the use of a film having the above-described specific structure and thickness as a coating film 3, even upon occurrence of char sticking to the cooking surface 1a due to such factors as spilling of foods, the sticking char can be easily removed and the hardness on the cooking surface 1a side can be increased.

The reasons can be explained as follows.

In the case where, as in a top plate 101 shown in Fig. 5, a cooking surface 101a is formed by a surface 102a of a glass substrate 102, hydroxy groups are unevenly distributed on the surface 102a of the glass substrate 102 (i.e., the cooking surface 101a). It can be considered that because hydroxy groups unevenly distributed on the cooking surface 101a have high affinity for sticking char 110, the char 110 sticks strongly to the cooking surface 101a and becomes difficult to remove.

Unlike the above, since in the top plate 1 according to this embodiment the cooking surface 1a is formed by a coating film 3 having the above-described specific structure, organic substituents, such as methyl groups, vinyl groups or phenyl groups, are unevenly distributed on the surface 3a of the coating film 3 (i.e., the cooking surface 1a), for example, as shown in Fig. 2. It can be considered that because these organic substituents unevenly distributed on the cooking surface 1a have low affinity for sticking char 10, the char 10 sticking to the cooking surface 1a can be easily removed. When, as just described, a coating film 3 having the above-described specific structure is provided on the glass substrate 2 of the top plate 1, the above effect can be significantly exerted.

Furthermore, since in the case of the top plate 1 the char 10 sticking to the cooking surface 1a can be easily removed by the above-described mechanism, this effect can be exerted even when the thickness of the coating film 3 is reduced and, therefore, the thickness of the coating film 3 can be reduced. Particularly, when the thickness of the coating film 3 is not more than 100 nm, this makes it possible for the top plate 1 to easily enjoy high hardness of the glass substrate and makes it possible to increase the hardness of the top plate 1 on the cooking surface 1a side. Since, as just described, the top plate 1 has excellent hardness on the cooking surface 1a side, the coating film 3 can be resistant to scratching due to rubbing against a cooking utensil, such as a pan, and the coating film 3 can be resistant to peeling from the cooking surface 1a.

In this embodiment, the thickness of the coating film 3 is preferably not less than 0.5 nm, more preferably not less than 1 nm, even more preferably not less than 1.7 nm, still even more preferably not less than 2 nm, yet still even more preferably not less than 2.5 nm, further preferably not less than 3 nm, even further preferably not less than 3.5 nm, still even further preferably not less than 4 nm, yet still even further preferably not less than 4.5 nm, moreover preferably not less than 5 nm, still moreover preferably not less than 6 nm, still moreover preferably not less than 7 nm, still moreover preferably not less than 8 nm, particularly preferably not less than 9 nm, preferably not more than 90 nm, more preferably not more than 80 nm, even more preferably not more than 70 nm, still even more preferably not more than 60 nm, yet still even more preferably not more than 55 nm, further preferably not more than 50 nm, even further preferably less than 50 nm, still even further preferably not more than 45 nm, yet still even further preferably not more than 40 nm, moreover preferably not more than 35 nm, still moreover preferably not more than 30 nm, still moreover preferably not more than 25 nm, still moreover preferably not more than 20 nm, still moreover preferably not more than 19 nm, still moreover preferably not more than 18 nm, still moreover preferably not more than 17 nm, still moreover preferably not more than 16 nm, still moreover preferably not more than 15 nm, still moreover preferably not more than 14 nm, still moreover preferably not more than 13 nm, still moreover preferably not more than 12 nm, still moreover preferably not more than 11 nm, and particularly preferably not more than 10 nm. When the thickness of the coating film 3 is not less than the above lower limit, the char 10 sticking to the cooking surface 1a can be more easily removed. Furthermore, the arithmetic mean height Sa of the surface 3a of the coating film 3 can be easily adjusted. On the other hand, when the thickness of the coating film 3 is not more than or less than the above upper limit, the hardness of the top plate 1 on the cooking surface 1a side can be further increased.

The measurement of the thickness of the coating film 3 can be made, for example, by a method for calculating it based on measurement of the spectral reflectivity or the spectral transmittance or a method for calculating it by spectral ellipsometry. Alternatively, when the measurement using these methods is difficult, the thickness of the coating film 3 can be measured, for example, by the method of observing the cross-section with a transmission electron microscope or the method of partly peeling the film to create a level difference and measuring the level difference with a stylus profilometer or a laser microscope.

In this embodiment, the arithmetic mean height Sa of the surface 3a of the coating film 3 is preferably not less than 0.3 nm, more preferably not less than 0.4 nm, even more preferably not less than 0.5 nm, still even more preferably not less than 1 nm, yet still even more preferably not less than 1.5 nm, further preferably not less than 2 nm, even further preferably not less than 3 nm, still even further preferably not less than 4 nm, yet still even further preferably not less than 5 nm, moreover preferably not less than 6 nm, still moreover preferably not less than 7 nm, may be, for example, not less than 8 nm, not less than 9 nm or not less than 10 nm, is preferably not more than 30 nm, more preferably not more than 28 nm, even more preferably not more than 25 nm, still even more preferably not more than 20 nm, yet still even more preferably not more than 15 nm, further preferably not more than 12 nm, even further preferably not more than 10 nm, and particularly preferably not more than 8 nm. When the arithmetic mean height Sa of the surface 3a of the coating film 3 is not less than the above lower limit, the char 10 sticking to the cooking surface 1a can be more easily removed. On the other hand, when the arithmetic mean height Sa of the surface 3a of the coating film 3 is not more than the above upper limit, the top plate can easily obtain a less cloudy and high-quality appearance and its texture can easily keep a high-quality feel of glass.

In this embodiment, the water contact angle of the surface 3a of the coating film 3 is preferably not less than 75 degrees, more preferably not less than 80 degrees, even more preferably not less than 85 degrees, particularly preferably not less than 90 degrees, preferably not more than 150 degrees, more preferably not more than 140 degrees, even more preferably not more than 130 degrees, and particularly preferably not more than 120 degrees. When the water contact angle of the surface 3a of the coating film 3 is not less than the above lower limit, the char 10 sticking to the cooking surface 1a can be more easily removed. On the other hand, when the water contact angle of the surface 3a of the coating film 3 is not more than the above upper limit, the surface is moderately wettable and, therefore, can be easily cleaned by wiping with water.

The water contact angle (θ) of the surface 3a of the coating film 3 can be measured based on the sessile drop method (half-angle fitting method) defined in JIS R 3257:1999. For example, in this embodiment, the water contact angle can be measured by placing the top plate 1 horizontally with the surface 3a of the coating film 3 facing up, putting a drop of 3 µL of pure water on the surface 3a, and then using a contact angle meter ("DropMaster DMe-200" manufactured by Kyowa Interface Science Co., ltd.).

In this embodiment, the pencil hardness of the top plate 1 measured from the side thereof having the coating film 3 is preferably not less than 7H, more preferably not less than 8H, and even more preferably not less than 9H. The upper limit of the pencil hardness of the top plate 1 measured from the side thereof having the coating film 3 is not particularly limited, but may be not more than 13H. In this case, the coating film 3 can be more resistant to scratching due to rubbing against a cooking utensil, such as a pan, and the coating film 3 can be more resistant to peeling from the cooking surface 1a. Particularly, in the case where the top plate 1 is used as a top plate for an electromagnetic cooker, it rubs directly against a cooking utensil and is therefore required to have higher scratch resistance. Although the application of the top plate 1 is not particularly limited, but when the top plate 1 have high scratch resistance, it can be used suitably as a top plate for an electromagnetic cooker.

The pencil hardness of the top plate 1 measured from the side thereof having the coating film 3 can be measured in conformity with JIS K 5600-5-4:1999.

In this embodiment, when a sample for char sticking evaluation is made on the top plate 1, the area ratio of char sticking portions (the char sticking area ratio) on the surface 3a of the coating film 3 (the cooking surface 1a) is preferably not more than 70%, more preferably not more than 50%, even more preferably not more than 10%, and particularly preferably not more than 5%. When the char sticking area ratio is not more than the above upper limit, the char 10 sticking to the cooking surface 1a can be more easily removed. The lower limit of the char sticking area ratio is not particularly limited, but may be, for example, 0.1%.

For example, a sample for char sticking evaluation can be made by dropping 1 mL of grilled meat sauce (trade name "Gokuuma Yakiniku-no-tare Amakuchi" manufactured by Ebara Foods Industry, Inc.) as an evaluation liquid onto the surface 3a of the coating film 3 and heating it at 250°C for 30 minutes. Examples of the evaluation liquid that can be used include, besides commercially available grilled meat sauces, soy sauce with sugar, jam, water-dissolved flour, water-dissolved starch, sugar solution, and mirin. The amount of evaluation liquid dropped may be, for example, not less than 1 mL and not more than 3 mL. The heating temperature may be, for example, not lower than 100°C and not higher than 300°C.

In evaluating the char sticking area ratio, as shown in Fig. 3, a sample 11 for char sticking evaluation is taken by a camera 12 from the side of the glass substrate 2 opposite to the coating film 3 (the reverse side 2b side). In doing so, an image is preferably taken by the bright-field illumination method and is preferably taken, for example, while the reverse side 2b of the glass substrate 2 is illuminated with light from a lamp 13. The imaging by the camera 12 may be conducted, for example, with the camera 12 inclined at an angle θ of 0 degrees to 20 degrees to the direction orthogonal to the reverse side 2b of the glass substrate 2.

The char sticking area ratio can be determined from the area ratio of char sticking portions of the obtained image to an entire region thereof where the sample 11 for char sticking evaluation is provided.

In this embodiment, when the cooker top plate 1 undergoes a heat resistance test under conditions at a temperature of 350°C for 24 hours, the change in water contact angle of the surface 3a of the coating film 3 between before and after the heat resistance test is preferably less than 3 degrees, more preferably not more than 2.5 degrees, even more preferably not more than 2 degrees, and still even more preferably not more than 1 degree. In this case, even when the top plate 1 is used for a long period of time or exposed to severe conditions, the nature of the surface 3a of the coating film 3 is difficult to change and, therefore, the char 10 sticking to the cooking surface 1a can be easily removed while the top plate 1 maintains its hardness on the cooking surface 1a side.

In this embodiment, from the viewpoint of further increasing the heat resistance of the top plate 1 and further increasing the adhesion of the glass substrate 2 to the coating film 3, the coating film 3 is preferably substantially free of phosphate ester compound and, particularly, preferably substantially free of phosphorus. Furthermore, from the viewpoint of further increasing the heat resistance of the top plate 1 and further reducing the environmental burden, the coating film 3 is preferably substantially free of fluorine. Moreover, from the viewpoint of further reducing the environmental burden, the coating film 3 is preferably substantially free of chlorine.

Herein, the expression the coating film 3 is substantially free of phosphate ester compound and/or phosphorus means that the content of phosphate ester compound and/or phosphorus is less than 1% by mass relative to 100% by mass of the entire coating film 3, and, needless to say, the content of phosphate ester compound and/or phosphorus may be less than 0.1% by mass or the coating film 3 may be completely free of phosphate ester compound and/or phosphorus. The expression the coating film 3 is substantially free of fluorine means that the content of fluorine is less than 1% by mass relative to 100% by mass of the entire coating film 3, and, needless to say, the content of fluorine may be less than 0.1% by mass or the coating film 3 may be completely free of fluorine. The expression the coating film 3 is substantially free of chlorine means that the content of chlorine is less than 1% by mass relative to 100% by mass of the entire coating film 3, and, needless to say, the content of chlorine may be less than 0.1% by mass or the coating film 3 may be completely free of chlorine.

In the top plate 1, the coating film 3 is preferably substantially free of oxide particulates different from the organo-polysiloxane and a source material of the organo-polysiloxane. In this case, a coating liquid can be more evenly applied to the glass substrate 2 during production and, therefore, the adhesion between the glass substrate 2 and the coating film 3 and the hardness of them can be further increased. Furthermore, the occurrence of poor appearance due to agglomerates of oxide particulates can be reduced. In addition, the surface of the coating film 3 can be prevented from excessively having asperities, which makes it less likely that the sticking char 10 wedges into the cooking surface 1a and, thus, makes it possible to more easily remove the sticking char 10.

The oxide particulates refer to particulates having an average primary particle diameter of not more than 1000 nm as observed and measured with a transmission electron microscope. The average particle diameter of the oxide particulates is preferably not less than 1 nm, more preferably not less than 5 nm, preferably not more than 100 nm, and more preferably not more than 15 nm.

The expression the coating film 3 is substantially free of oxide particulates means that the content of oxide particulates therein is less than 3% by mass relative to 100% by mass of the entire coating film 3.

On the other hand, when the coating film 3 contains oxide particulates, the content of oxide particulates is preferably not more than 50% by mass and more preferably not more than 10% by mass relative to 100% by mass of the entire coating film 3.

The type of oxide particulates is not particularly limited and examples that can be used include silica, titania, zirconia, antimony oxide, alumina, indium oxide, and a mixture of any of them.

Hereinafter, a description will be given of an example of a method for producing a top plate 1.

### (Production Method of Top Plate 1)

In a method for producing a top plate 1 according to this embodiment, first, a glass substrate 2 is prepared. The glass substrate 2 as described previously can be used as a glass substrate 2.

Next, a coating liquid is applied to the surface 2a of the prepared glass substrate 2. The method for applying the coating liquid is not particularly limited and examples that can be used include spray coating, dip coating, spin coating, dispenser method, rolling method, blade method, and screen printing. Spray coating is preferred as the method for applying the coating liquid. When the method for applying the coating liquid is spray coating, the arithmetic mean height Sa of the surface 3a of the resultant coating film 3 can be easily controlled according to the composition of the coating liquid, the pressure of application thereof, the nozzle shape or so on and the arithmetic mean height Sa can be increased, which enables easier removal of the char 10 sticking to the cooking surface 1a.

As the coating liquid, a liquid can be used which contains a compound represented by formula (2) below or a hydrolytic condensate in which at least part of the compound is hydrolyzed and condensed (hereinafter, also referred to collectively as a siloxane polymer).

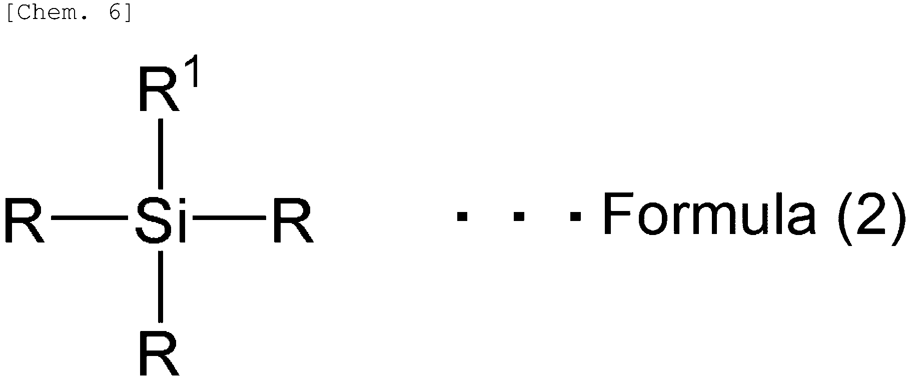

In the formula (2), R¹ represents an alkyl group having 1 to 6 carbon atoms, a phenyl group or a vinyl group and R represents an alkoxy group. R¹ mentioned above is preferably an alkyl group having 1 to 6 carbon atoms or a phenyl group, more preferably a methyl group, an ethyl group, an n-propyl group, an isopropyl group, an n-butyl group, an isobutyl group, a sec-butyl group, a tert-butyl group, a pentyl group, a hexyl group or a phenyl group, and even more preferably a methyl group or a phenyl group. Particularly, a methyl group or a phenyl group is preferred because they have excellent heat resistance. R is preferably a methoxy group, an ethoxy group, a propoxy group, a butoxy group, a pentoxy group or a hexoxy group, and more preferably a methoxy group or an ethoxy group.

The siloxane polymer can be grown in size by accelerating a hydrolytic condensation reaction. The size of the siloxane polymer may be, for example, 0.5 nm to 10 nm by a volumetric average.

The content of the siloxane polymer is, in terms of mass percentage of solid in liquid, preferably not less than 0.5%, more preferably not less than 0.8%, preferably not more than 25%, more preferably not more than 20%, even more preferably not more than 14%, still even more preferably not more than 12%, yet still even more preferably not more than 10%, further preferably not more than 8%, even further preferably not more than 6%, still even further preferably not more than 4%, and particularly preferably not more than 3%. In this case, the coating film 3 can be more easily formed.

The coating liquid preferably contains, as a siloxane polymer, one containing a trifunctional alkoxide and a hydrolytic condensate thereof in a major proportion. The siloxane polymer may contain, besides trifunctional siloxane units, tetrafunctional siloxane units, bifunctional siloxane units or monofunctional siloxane units. The proportion of trifunctional siloxane units is, in terms of molar ratio based on Si, preferably not less than 60%, more preferably not less than 70%, even more preferably not less than 80%, and particularly preferably not less than 90%. As the proportion of trifunctional siloxane units contained in the siloxane polymer increases, the durability and non-stick performance of the coating film 3 can be achieved at higher levels.

Examples of the trifunctional alkoxide include methyltrimethoxysilane, methyltriethoxysilane, methyltri(n-propoxy)silane, methyltri(i-propoxy)silane, methyltri(n-butoxy)silane, methyl(n-pentoxy)silane, methyl(n-hexoxy)silane, methyltri(phenoxy)silane, ethyltrimethoxysilane, ethyltriethoxysilane, ethyltri(n-propoxy)silane, ethyltri(i-propoxy)silane, ethyltri(n-butoxy)silane, ethyltri(n-pentoxy)silane, ethyl(n-hexoxy)silane, ethyltriphenoxysilane, n-propyltrimethoxysilane, n-propyltriethoxysilane, n-propyltri(n-propoxy)silane, n-propyltri(i-propoxy)silane, i-propyltrimethoxysilane, i-propyltriethoxysilane, i-propyltri(n-propoxy)silane, i-propyltri(i-propoxy)silane, n-butyltrimethoxysilane, n-butyltriethoxysilane, n-butyltri(n-propoxy)silane, n-butyltri(i-propoxy)silane, n-butyltri(n-butoxy)silane, n-pentyltrimethoxysilane, n-pentyltriethoxysilane, n-pentyltri(n-propoxy)silane, n-pentyltri(i-propoxy)silane, n-pentyltri(n-butoxy)silane, n-pentyltri(n-pentoxy)silane, cyclopentyltrimethoxysilane, cyclopentyltriethoxysilane, cyclopentyl(n-propoxy)silane, cyclopentyl(i-propoxy)silane, cyclopentyltri(n-butoxy)silane, cyclopentyltri(n-pentoxy)silane, cyclopentyltri(cyclopentoxy)silane, n-hexyltrimethoxysilane, n-hexyltriethoxysilane, n-hexyltri(n-propoxy)silane, n-hexyltri(i-propoxy)silane, n-hexyltri(n-butoxy)silane, n-hexyltri(n-pentoxy)silane, n-hexyltri(n-hexoxy)silane, cyclohexyltrimethoxysilane, cyclohexyltriethoxysilane, cyclohexyltri(n-propoxy)silane, cyclohexyltri(n-butoxy)silane, cyclohexyltri(n-pentoxy)silane, cyclohexyltri(n-hexoxy)silane, cyclohexyltri(cyclohexoxy)silane, phenyltrimethoxysilane, phenyltriethoxysilane, phenyltri(n-propoxy)silane, phenyltri(n-butoxy)silane, phenyltri(n-pentoxy)silane, phenyltri(n-pentoxy)silane, phenyltri(n-hexoxy)silane, phenyltri(phenoxy)silane, vinyltrimethoxysilane, vinyltriethoxysilane, vinyltri(n-propoxy)silane, vinyltri(i-propoxy)silane, vinyltri(n-butoxy)silane, vinyl(n-pentoxy)silane, vinyl(n-hexoxy)silane, and vinyltri(phenoxy)silane. The trifunctional alkoxide is preferably methyltrimethoxysilane, methyltriethoxysilane, phenyltrimethoxysilane, phenyltriethoxysilane, vinyltrimethoxysilane or vinyltriethoxysilane, and more preferably methyltriethoxysilane.

The coating liquid may contain an alumina precursor, a zirconia precursor, a titania precursor or an yttria precursor. These precursors may be used singly or in combination of two or more of them. When the coating liquid contains an alumina precursor, a zirconia precursor, a titania precursor or an yttria precursor, the durability of the coating film 3 can be further increased.

The content of the alumina precursor, the zirconia precursor, the titania precursor or the yttria precursor (or, when the coating liquid contains a plurality of types of these precursors, the total content of them) may be, for example, 0% to 30% in terms of mass percentage of alumina, zirconia, titania or yttria in solid.

Examples of the alumina precursor include aluminum alkoxides, hydrolytic condensates of aluminum alkoxides, water-soluble aluminum salts, and aluminum chelates. Examples of water-soluble aluminum salts include aluminum nitrate, aluminum chloride, aluminum sulfate, aluminum acetate, aluminum formoacetate, and aluminum acetyl acetate.

Examples of the zirconia precursor include zirconium alkoxides, hydrolytic condensates of zirconium alkoxides. Examples of the titania precursor include titanium alkoxides, hydrolytic condensates of titanium alkoxides.

The coating liquid contains a solvent. The type of the solvent is not particularly limited and examples include water, alcohols, ketones, ethers, cellosolves, esters, and glycol ethers. These solvents may be used singly or in combination of two or more of them.

Water can be used for a hydrolysis reaction of the trifunctional alkoxide or the like. However, if the content of water is too large, the resultant coating film 3 is likely to crack because of a high surface tension of water. Therefore, the content of water may be, for example, 0.5 to 10 in terms of molar ratio to Si atom.

Furthermore, from the viewpoint of making the coating liquid more dryable, the coating liquid preferably contains a solvent having a boiling point of lower than 90°C. Examples of the solvent having a boiling point of lower than 90°C include methanol, ethanol, isopropyl alcohol, tetrahydrofuran, and hexane. The content of solvent having a boiling point of lower than 90°C (or, when the coating liquid contains a plurality of types of solvents, the total content of them) may be, for example, not less than 10% and not more than 90% in terms of mass percentage thereof in the entire coating liquid.

As the content of isopropyl alcohol in the coating liquid increases, the arithmetic mean height Sa of the resulting coating film 3 can be increased. The content of isopropyl alcohol is, in terms of mass percentage thereof in the entire coating liquid, preferably not less than 20%, more preferably not less than 30%, preferably not more than 90%, and more preferably not more than 80%.

The coating liquid is preferably substantially free of oxide particulates different from the source material of the siloxane polymer. In this case, the coating liquid can be more easily formulated and a uniform coating film can be easily formed. As a result, the hardness of the top plate 1 on the cooking surface 1a side can be further increased. In addition, when the coating film 3 is formed on the glass substrate 2 by spray coating, the adhesion between the glass substrate 2 and the coating film 3 and the hardness of them can be further increased and the occurrence of poor appearance due to agglomerates of oxide particulates can be prevented. The oxide particulates are preferably components different from the components forming the matrix.

The oxide particulates refer to particulates having an average primary particle diameter of not more than 1000 nm as observed and measured with a transmission electron microscope. The average particle diameter of the oxide particulates is preferably not less than 1 nm, more preferably not less than 5 nm, preferably not more than 100 nm, and more preferably not more than 15 nm.

The expression the coating liquid is substantially free of oxide particulates means that the content of oxide particulates therein is less than 0.1% by mass relative to the total amount of the coating liquid (a state before the source material of the siloxane polymer is hydrolytically condensed).

On the other hand, when the coating liquid contains oxide particulates, the content of oxide particulates is preferably not more than 0.5% by mass and more preferably not more than 0.2% by mass relative to the total amount of the coating liquid (a state before the source material of the siloxane polymer is hydrolytically condensed).

The type of oxide particulates is not particularly limited and examples that can be used include silica, titania, zirconia, antimony oxide, alumina, indium oxide, and a mixture of any of them.

The content (heating residue) of solid in the coating liquid may be, for example, 0.5% by mass to 5% by mass.

In applying the coating liquid by spray coating, the coating liquid is sprayed onto the surface 2a of the glass substrate 2. Examples of the nozzle for use in spray coating include a two-fluid nozzle and a single-fluid nozzle, but a two-fluid spray gun with a two-fluid nozzle is preferably used. In this case, the adhesion between the glass substrate 2 and the coating film 3 can be further increase.

The amount of coating liquid applied per unit area by spray coating (the spread thereof sprayed) is preferably not less than 3 g/m², more preferably not less than 5 g/m², even more preferably not less than 10 g/m², preferably not more than 150 g/m², more preferably not more than 100 g/m², and even more preferably not more than 50 g/m². Although it depends on the solid concentration of the coating film, as the spread of coating liquid sprayed increases, the surface 3a of the resultant coating film 3 tends to have a larger arithmetic mean height Sa. Furthermore, the surface 3a of the resultant coating film 3 tends to have a larger thickness. On the other hand, as the spread of coating liquid sprayed decreases, the surface 3a of the resultant coating film 3 tends to have a smaller arithmetic mean height Sa. Furthermore, the surface 3a of the resultant coating film 3 tends to have a smaller thickness.

The flow rate of air in spray coating may be, for example, 10 L/min to 200 L/min. The air pressure may be, for example, 0.05 MPa to 0.5 MPa. The distance of the gun may be, for example, not less than 60 mm and not more than 300 mm. The distance of the gun refers to the distance from the gun to the surface 2a of the glass substrate 2 on which the film is to be formed.

The temperature of the coating liquid applied may be, for example, not lower than 10°C and not higher than 30°C. The surface temperature of the surface 2a of the glass substrate 2 during application of the coating liquid may be, for example, not lower than 10°C and not higher than 80°C. The humidity during application of the coating liquid may be, for example, not less than 20% and not more than 60%.

The drying temperature for the coating liquid is not particularly limited, but may be, for example, not lower than 100°C and not higher than 150°C. The drying time may be, for example, not less than 5 minutes and not more than 120 minutes.

Next, the film-bearing glass substrate to which the coating liquid has been applied is fired at a temperature of 200°C or higher. Thus, a coating film 3 is formed on the surface 2a of the glass substrate 2 and, as a result, a top plate 1 can be obtained.

The firing temperature for the film-bearing glass substrate is preferably not lower than 200°C, more preferably not lower than 250°C, even more preferably not lower than 300°C, preferably not higher than 500°C, more preferably not higher than 400°C, and even more preferably not higher than 380°C. In order to make the resultant coating film 3 dense and give it high hardness, a higher firing temperature is preferred. When the firing temperature for the film-bearing glass substrate is not lower than the above lower limit, the hardness of the resultant coating film 3 can be further increased.

On the other hand, the upper limit of the firing temperature for the film-bearing glass substrate is preferably not higher than the temperature at which R¹ in the formula (1) can be maintained.

The firing time for the film-bearing glass substrate is not particularly limited, but is preferably not less than 5 minutes, more preferably not less than 20 minutes, preferably not more than 120 minutes, and more preferably not more than 60 minutes.

The firing of the film-bearing glass substrate can be done, for example, with a hot air heater, a contact heater or a far-infrared heater.

In the manner described so far, a coating film 3 containing an organo-polysiloxane having trifunctional siloxane units represented by the formula (1) above can be formed on the surface 2a of the glass substrate 2. The obtained coating film 3 has a three-dimensional cross-linked structure containing siloxane bonds.

The coating film 3 may contain other components without impairing the effects of the present invention. An example of the other component is a color pigment, such as copper phthalocyanine. The content of the other components may be, for example, not more than 10% by mass relative to the entire coating film 3. However, the coating film 3 may be substantially free of the other components.

### [Second Embodiment]

Fig. 4 is a schematic cross-sectional view showing a cooker top plate according to a second embodiment of the present invention. As shown in Fig. 4, in a cooker top plate 21, a light-shielding layer 22 and a heat-resistant resin layer 23 are provided on the reverse side 2b of the glass substrate 2.

Examples of the light-shielding layer 22 that can be used include a layer containing glass and a color pigment, and a layer containing a heat-resistant resin and a color pigment. Examples of the heat-resistant resin layer include a layer containing a heat-resistant resin and a color pigment, and a layer containing a heat-resistant resin, a color pigment, and an extender pigment. An example of the heat-resistant resin is silicone resin. As for the rest, the second embodiment is designed in the same way as the first embodiment.

The top plate 21 according to the second embodiment also has the coating film 3 described previously and, therefore, upon occurrence of char sticking to the cooking surface 21a due to such factors as spilling of foods, enables easy removal of the sticking char and has excellent hardness on the cooking surface 21a side.

As in the second embodiment, a light-shielding layer 22 and a heat-resistant resin layer 23 may be provided on the reverse side 2b of the glass substrate 2. Both the light-shielding layer 22 and the heat-resistant resin layer 23 may be provided or either one of them may be provided. Furthermore, each of the light-shielding layer 22 and the heat-resistant resin layer 23 may be provided as a single layer or as a plurality of layers. Alternatively, any layer other than the light-shielding layer 22 and the heat-resistant resin layer 23 may be provided on the reverse side 2b of the glass substrate 2.

Without impairing the effects of the present invention, any other layer, such as a decorative layer or a hard coating layer, may also be provided on a portion of the surface 3a of the coating film 3. When viewed in plan, the area where these other layers are provided may be, for example, not less than 0% and not more than 80% relative to the total area of the coating film 3. The other layers, such as a decorative layer or a hard coating layer, are preferably provided between the glass substrate 2 and the coating film 3.

### [Third Embodiment]

Fig. 6 is a schematic cross-sectional view showing a cooker top plate according to a third embodiment of the present invention. As shown in Fig. 6, in a cooker top plate 31, a printed layer 32 having a pattern is provided on the surface 2a of the glass substrate 2. Furthermore, in the cooker top plate 31, a coating film 3 is provided to cover the printed layer 32 on the surface 2a of the glass substrate 2.

Examples of the pattern include dotted, grid, striped, and ring-shaped patterns.

When the printed layer 32 has a dotted pattern and each dot has an approximately circular shape, the diameter of the dots may be, for example, within a range of not less than 0.1 mm and not more than 3 mm. When the printed layer 32 has a grid, striped or ring-shaped pattern, the width of each line may be, for example, within a range of not less than 0.1 mm and not more than 3 mm.

When viewed in plan, the ratio of the total area of regions where the printed layer 32 is provided may be, for example, not less than 0.1% and not more than 20% relative to the total area of the surface 2a of the glass substrate 2. The thickness of the printed layer 32 may be, for example, not less than 0.1 µm and not more than 10 µm.

The printed layer 32 may be made of a glass or made of a resin. The printed layer 32 may contain a glass and an inorganic pigment or contain a resin and an inorganic pigment. The inorganic pigment used may be a color pigment or an extender pigment. Alternatively, both a color pigment and an extender pigment may be used as the inorganic pigment.

The glass substrate 2 and the coating film 3 that can be used are the same as in the first embodiment. In this embodiment, the measurement of the thickness and surface roughness of the coating film 3 is taken by measuring the thickness and surface roughness of a portion of the coating film 3 in which the printed layer 32 is not provided on the glass substrate 2.

The top plate 31 according to the third embodiment also has the coating film 3 described previously and, therefore, upon occurrence of char sticking to the cooking surface 31a due to such factors as spilling of foods, enables easy removal of the sticking char and has excellent hardness on the cooking surface 31a side. When, as in this embodiment, the coating film 3 is provided also on the printed layer 32 having a pattern, even upon occurrence of char sticking to the printed layer 32, the sticking char can be easily removed. However, in the present invention, the coating film 3 may not be provided on the printed layer 32. In this case, the coating film 3 is sufficient to be provided on a portion of the surface 2a of the glass substrate 2 where the coating film 3 is not provided.

### [Fourth Embodiment]

### (Char Sticking Evaluation Method)

Fig. 7 is a schematic cross-sectional view for illustrating a plate-shaped material as an example for use in a char sticking evaluation method according to a fourth embodiment of the present invention.

The char sticking evaluation method according to this embodiment is a method for evaluating the removability of sticking char on a plate-shaped material 41 shown in Fig. 7. In this embodiment, the plate-shaped material 41 is a cooker top plate.

The plate-shaped material 41 has a first principal surface 41a and a second principal surface 41b opposed to each other. In this embodiment, the first principal surface 41a is a cooking surface of a cooker top plate on which a cooking utensil, such as a pot or a frying pan, is to be placed. The second principal surface 41b is a principal surface located toward the interior of the cooker and facing a light source and a heater. Therefore, the first principal surface 41a and the second principal surface 41b are top and under sides of the same material.

In the case where, as in this embodiment, the plate-shaped material 41 is a cooker top plate, foods spilled thereon during heating, such as when cooking ingredients in a cooking utensil boil over, may char and stick to the cooking surface. According to the char sticking evaluation method in this embodiment, when char sticks to the first principal surface 41a serving as a cooking surface, the removability of char sticking to the first principal surface 41a can be evaluated.

Specifically, the char sticking evaluation method according to this embodiment includes: a sample making step of making a sample for char sticking evaluation on the first principal surface 41a of the plate-shaped material 41; an imaging step of taking an image of the sample for char sticking evaluation from the side of the plate-shaped material 41 where the second principal surface 41b is located; and a measurement step of measuring, from the image taken in the imaging step, at least one of the area of char sticking portions of the sample for char sticking evaluation and the area of char non-sticking portions thereof.

### (Sample Making Step)

Figs. 8(a) to 8(c) are schematic cross-sectional views for illustrating a sample making step in the char sticking evaluation method according to the fourth embodiment of the present invention.

In the sample making step, first, a plate-shaped material 41 shown in Fig. 8(a) is prepared. In doing so, for ease of taking an image in the subsequent imaging step and if necessary without affecting the removability of sticking char on the first principal surface 41a of the plate-shaped material 41, the second principal surface 41b of the plate-shaped material 41 may be smoothed by polishing or the like or a coating film, if provided, on the second principal surface 41b of the plate-shaped material 41 may be removed. Next, as shown in Fig. 8(b), an evaluation liquid 42 is dropped onto the first principal surface 41a of the plate-shaped material 41. The type of the evaluation liquid 42 is not particularly limited and examples that can be used include commercially available grilled meat sauces, jam, sugar, soy sauce, soy sauce with sugar, mirin, and milk. The amount of the evaluation liquid 42 dropped may be, for example, not less than 1 mL and not more than 3 mL. The evaluation liquid 42 is preferably stirred well just before being dropped.

Next, the plate-shaped material 41 onto which the evaluation liquid 42 has been dropped is heated. Thus, as shown in Fig. 8(c), a sample 51 for char sticking evaluation is made on the first principal surface 41a of the plate-shaped material 41. In heating the plate-shaped material 41, the whole of the plate-shaped material 41 may be heated or a portion thereof, i.e., a region where the evaluation liquid 42 has been dropped may be heated. The heating means is not particularly limited and may be any of hot air, infrared, electromagnetic, and gas heating means and examples that can be used include a furnace, a heater, and a burner.

The heating temperature for the plate-shaped material 41 is not particularly limited, but may be, for example, not lower than 100°C and not higher than 300°C. The heating time for the plate-shaped material 41 is not particularly limited, but may be, for example, not less than one minute and not more than sixty minutes.

### (Imaging Step)

Fig. 9 is a schematic cross-sectional view for illustrating an imaging step in the char sticking evaluation method according to the fourth embodiment of the present invention.

As shown in Fig. 9, in the imaging step, an image of the sample 51 for char sticking evaluation is taken by a camera 52 from the side of the plate-shaped material 41 where the second principal surface 41b is located. Furthermore, in the imaging step, the image is taken using the bright-field illumination method, while the second principal surface 41b of the plate-shaped material 41 is illuminated with light from a lamp 53. The imaging by the camera 52 may be conducted, for example, with the camera 52 inclined at an angle θ of 0 degrees to 20 degrees to the direction orthogonal to the second principal surface 41b of the plate-shaped material 41. In using an area sensor camera as the camera 52, the image is preferably taken while the whole of char sticking portions is entirely illuminated with light using a planar illumination device as the lamp 53. In using a line sensor camera as the camera 52, the image is preferably taken using a linear illumination device as the lamp 53 while the plate-shaped material 41 is conveyed in a single direction. Furthermore, an optical element, such as a mirror, a half mirror, a prism or an optical filter, may be appropriately used. The method for taking an image of the sample 51 for char sticking evaluation in the imaging step is not particularly limited so long as, in the measurement described hereinafter, at least one of the area of char sticking portions of the sample and the area of char non-sticking portions thereof can be measured. The resolution of the image obtained by imaging should preferably be a resolution sufficient to calculate the char sticking area and is, for example, preferably 100 ppi to 500 ppi.

### (Measurement Step)

Fig. 10 shows an example of a photograph taken in the imaging step of the char sticking evaluation method according to the fourth embodiment of the present invention. Furthermore, Fig. 11 is a view for illustrating a method for measuring the area of char sticking portions and the area of char non-sticking portions in the photograph of Fig. 10.

As shown as an example in Fig. 11, in the measurement step, char sticking portions 54 are distinguished from char non-sticking portions 55 in the image (see Fig. 10) taken in the imaging step. In the image shown in Fig. 11, the char sticking portions 54 are portions represented in black and the char non-sticking portions 55 are portions represented in white. The char sticking portions 54 are portions where the sample 51 for char sticking evaluation adheres tightly to the plate-shaped material 41, whereas the char non-sticking portions 55 are portions where the sample 51 for char sticking evaluation is floated from the plate-shaped material 41 (i.e., the sample 51 for char sticking evaluation does not adhere tightly to the plate-shaped material 41).

Next, from the image shown in Fig. 11, at least one of the area of the distinguished char sticking portions 54 and the area of the distinguished char non-sticking portions 55 is measured. The distinguishing and area measurement of the char sticking portions 54 and the char non-sticking portions 55 can be made, for example, using image analysis software. Although, herein, the char sticking portions 54 are distinguished from the char non-sticking portions 55 by black and white for explanatory convenience, needless to say, the char sticking portions 54 may be distinguished from the char non-sticking portions 55 by other different colors in an actual analysis.

In this embodiment, at least one of the area of the char sticking portions 54 and the area of the char non-sticking portions 55 can be used to evaluate the removability of sticking char. For example, in evaluating the removability of sticking char using the area of the char sticking portions 54, it can be evaluated that the smaller the area of the char sticking portions 54, the easier it is to remove sticking char from the plate-shaped material 41. On the other hand, in evaluating the removability of sticking char using the area of the char non-sticking portions 55, it can be evaluated that the larger the area of the char non-sticking portions 55, the easier it is to remove sticking char from the plate-shaped material 41.

Alternatively, referring to Fig. 11, the removability of sticking char may be evaluated by measuring the area of a region 56 where the sample 51 for char sticking evaluation is provided and using a char sticking area ratio which is the ratio of the area of the char sticking portions 54 to the area of the region 56. In this case, it can be evaluated that the smaller the char sticking area ratio, the easier it is to remove sticking char from the plate-shaped material 41.

Still alternatively, the removability of sticking char may be evaluated by measuring the area of a region 56 where the sample 51 for char sticking evaluation is provided and using a char non-sticking area ratio which is the ratio of the area of the char non-sticking portions 55 to the area of the region 56. In this case, it can be evaluated that the larger the char non-sticking area ratio, the easier it is to remove sticking char from the plate-shaped material 41.

The area of the region 56 is the area of an entire region where the sample 51 for char sticking evaluation is provided. The area of the region 56 corresponds to the sum of the area of the char sticking portions 54 and the area of the char non-sticking portions 55.

The area of an entire region where the sample 51 for char sticking evaluation is provided may be determined by taking an image of the region where the sample 51 for char sticking evaluation is provided from the side of the plate-shaped material 41 where the first principal surface 41a is located. Alternatively, the area of an entire region where the sample 51 for char sticking evaluation is provided may be determined by measuring, before heating the plate-shaped material 41 in the sample making step after dropping the evaluation liquid 42 onto the plate-shaped material 41, the area of the evaluation liquid 42 dropped. In this case, the area of the evaluation liquid 42 dropped may be determined by taking an image of a region where the evaluation liquid 42 is provided from the side of the plate-shaped material 41 where the first principal surface 41a is located or by taking an image of the region where the evaluation liquid 42 is provided from the side of the plate-shaped material 41 where the second principal surface 41b is located. Using the area of the entire region where the sample 51 for char sticking evaluation is provided measured in any of the above manners, the char sticking area ratio or the char non-sticking area ratio may be determined.

Since the char sticking evaluation method according to this embodiment has the features described so far, the removability of sticking char on the plate-shaped material 41 can be reliably evaluated with less variation depending on the evaluator.

Conventionally, the method of rubbing off char sticking to a plate-shaped material and observing how the char is removed has a problem of difficulty in objectively evaluating the removability of sticking char. Furthermore, even when char could be rubbed off under certain conditions, there arises a problem that the evaluation of how the char has been removed varies depending on the evaluator.

Unlike the above, in the char sticking evaluation method according to this embodiment, the removability of sticking char is evaluated using at least one of the area of char sticking portions 54 and the area of char non-sticking portion 55. Therefore, the removability of sticking char can be objectively evaluated and can be reliably evaluated with less variation depending on the evaluator.

Although in the above embodiment the evaluation step comprises the imaging step and the measurement step, the evaluation method in the present invention is not particularly limited so long as the removability of sticking char can be evaluated in the evaluation step. For example, the removability of sticking char may be evaluated by visually observing char sticking portions 54 and char non-sticking portions 55. The char sticking portions 54 can be distinguished from the char non-sticking portions 55 by visually observing the side of the plate-shaped material 41 opposite to the side thereof where the sticking char is present. Specifically, portions of the sample 51 for char sticking evaluation adhering tightly to the plate-shaped material 41 are determined to be char sticking portions 54, whereas portions of the samples 51 for char sticking evaluation floating from the plate-shaped material 41 are determined to be char non-sticking portions 55.

In evaluating the removability of sticking char by visually observing the char sticking portions 54 as described above, it can be evaluated that the smaller the area of the char sticking portions 54, the easier it is to remove sticking char from the plate-shaped material 41. On the other hand, in evaluating the removability of sticking char by visually observing the char non-sticking portions 55, it can be evaluated that the larger the area of the char non-sticking portions 55, the easier it is to remove sticking char from the plate-shaped material 41. Alternatively, the removability of sticking char can be evaluated by visually checking the char sticking portions 54 and the char non-sticking portions 55, in which case it can be evaluated that the smaller the ratio of the area of the char sticking portions 54 to the total area of the char sticking portions 54 and the char non-sticking portions 55, the easier it is to remove sticking char from the plate-shaped material 41. Furthermore, it can be evaluated that the larger the ratio of the area of the char non-sticking portions 55 to the total area of the char sticking portions 54 and the char non-sticking portions 55, the easier it is to remove sticking char from the plate-shaped material 41.

The char sticking evaluation method according to this embodiment can be used, for example, in determining whether the plate-shaped material 41 is a non-defective product or a defective product. For example, in the process for inspecting the plate-shaped material 41, whether the plate-shaped material 41 is a non-defective product or a defective product may be determined using the char sticking area ratio determined in the manner described previously.

Although in this embodiment a cooker top plate is used as the plate-shaped material 41, the plate-shaped material 41 may be, for example, a worktop, such as a kitchen top, a small object, a turntable for a microwave or a window for a stove or a fireplace and the application of the plate-shaped material 41 is not particularly limited.

The plate-shaped material 41 preferably transmits light in at least a part of a wavelength range of 400 nm to 700 nm. Furthermore, the plate-shaped material 41 may be clear or clear and colorless in a visible range. Herein, "clear in a visible range" means that the light transmittance in a visible wavelength range of 400 nm to 700 nm is not less than 70%. However, the plate-shaped material 41 may be colored or have a low degree of clearness depending on the type of the camera 52, the type of the lamp 53 or so on and within a range where an image of the sample 51 for char sticking evaluation can be taken. Alternatively, for example, the plate-shaped material 41 may have an average transmittance of not less than 30% in a wavelength range of 700 nm to 3000 nm. The image of the sample 51 for char sticking evaluation may be taken by changing the type of the camera 52 or the type of the lamp 53 according to the desired wavelength.

The shape of the plate-shaped material 41 is not particularly limited and can be selected appropriately according to the purpose. Example of the shape of the plate-shaped material 41 include a rectangular plate shape, a disc shape, an elliptic plate shape, and a polygonal plate shape. The thickness of the plate-shaped material 41 is not particularly limited and may be, for example, not less than 2 mm and not more than 6 mm.

### [Cooker Top Plate]

A cooker top plate according to a fourth embodiment of the present invention has a char sticking area ratio of not more than 70% determined by the above-described char sticking evaluation method. Therefore, according to the cooker top plate in the fourth embodiment of the present invention, upon occurrence of char sticking to the cooking surface due to such factors as spilling of foods, the sticking char can be easily removed.

In the cooker top plate, the char sticking area ratio determined by the above-described char sticking evaluation method is preferably not more than 65%, more preferably not more than 50%, even more preferably not more than 40%, still even more preferably not more than 30%, yet still even more preferably not more than 20%, further preferably not more than 10%, even further preferably not more than 8%, and particularly preferably not more than 5%. When the char sticking area ratio is not more than the above upper limit, the char sticking to the cooking surface can be more easily removed. The lower limit of the char sticking area ratio is not particularly limited, but may be, for example, 0.1%.

The cooker top plate can appropriately use any of the structures of the cooker top plates described in the first to third embodiments.

Since the top plate according to this embodiment has the above structure, the char sticking area ratio determined by the above-described char sticking evaluation method can be reduced. Particularly, when a coating film 3 containing an organo-polysiloxane having trifunctional siloxane units represented by the formula (1) above is formed on the surface 2a, the char sticking area ratio determined by the above char sticking evaluation method can be reduced. Therefore, when char sticks to the cooking surface 1a due to such factors as spilling of foods, the sticking char can be easily removed.

### [Cooker Top Plate and Production Method Thereof]

Hereinafter, a description will be given in further detail of the present invention with reference to specific examples. The present invention is not at all limited by the following examples and can be embodied in appropriately modified forms without changing the gist of the invention.

### Preparation of Glass Substrate A;

As a glass substrate A, a clear crystallized glass plate ("N-0" manufactured by Nippon Electric Glass Co., Ltd., average coefficient of linear thermal expansion at 30°C to 380°C: 1 × 10⁻⁷/°C, thickness: 4 mm, arithmetic mean height Sa: 0.30 nm) was prepared.

### Preparation of Glass Substrate B;

As a glass substrate B, an aluminoborosilicate glass ("OA-11" manufactured by Nippon Electric Glass Co., Ltd., average coefficient of linear thermal expansion at 30°C to 380°C: 37 × 10⁻⁷/°C, thickness: 0.5 mm, arithmetic mean height Sa: 0.26 nm) was prepared.

### Preparation of Coating Liquid A;

An amount of 1 part by mass of methyltriethoxysilane was mixed with 0.51 parts by mass of water, 36.1 parts by mass of isopropyl alcohol, and nitric acid and the mixture was stirred, thus obtaining a coating liquid A. In doing so, hydrolysis and condensation reactions of methyltriethoxysilane were promoted to grow the size of a hydrolytic condensate to a volume mean size of 1.0 nm as measured by dynamic light scattering measurement. Nitric acid was mixed to give a pH = 4. The concentration of solid (heating residual) in the obtained coating liquid A was 1.0% by mass.

### Preparation of Coating Liquid B;

An amount of 1 part by mass of methyltriethoxysilane was mixed with 0.51 parts by mass of water, 36.1 parts by mass of modified ethanol (containing 82.2% by mass ethanol as a major ingredient, methanol, isopropyl alcohol and so on), and nitric acid and the mixture was stirred, thus obtaining a coating liquid B. In doing so, hydrolysis and condensation reactions of methyltriethoxysilane were promoted to grow the size of a hydrolytic condensate to a volume mean size of 1.0 nm as measured by dynamic light scattering measurement. Nitric acid was mixed to give a pH = 4. The concentration of solid (heating residual) in the obtained coating liquid B was 1.0% by mass.

### Preparation of Coating Liquid C;

An amount of 1 part by mass of methyltrimethoxysilane was mixed with 0.66 parts by mass of water, 30.9 parts by mass of isopropyl alcohol, 16.3 parts by mass of 1-methoxy-2-propanol, and nitric acid and the mixture was stirred, thus obtaining a coating liquid C. In doing so, hydrolysis and condensation reactions of methyltrimethoxysilane were promoted to grow the size of a hydrolytic condensate to a volume mean size of 0.7 nm as measured by dynamic light scattering measurement. Nitric acid was mixed to give a pH = 4. The concentration of solid (heating residual) in the obtained coating liquid C was 1.0% by mass.

### Preparation of Coating Liquid D;

An amount of 0.73 parts by mass of methyltriethoxysilane and 0.27 parts by mass of phenyltrimethoxysilane were mixed with 2.42 parts by mass of water, 44.2 parts by mass of isopropyl alcohol, and nitric acid and the mixture was stirred, thus obtaining a coating liquid D. In doing so, hydrolysis and condensation reactions of methyltrimethoxysilane and phenyltrimethoxysilane were promoted to grow the size of a hydrolytic condensate to a volume mean size of 1.0 nm as measured by dynamic light scattering measurement. Nitric acid was mixed to give a pH = 4. The concentration of solid (heating residual) in the obtained coating liquid D was 1.1% by mass.

### Preparation of Coating Liquid E;

An amount of 1 part by mass of methyltrimethoxysilane, 0.145 parts of aluminum nitrate nonahydrate, 1.12 parts by mass of water, 50.6 parts by mass of isopropyl alcohol, and nitric acid were mixed and stirred, thus obtaining a coating liquid E. In doing so, hydrolysis and condensation reactions of methyltrimethoxysilane were promoted to grow the size of a hydrolytic condensate and the emulsified liquid was passed through a filter with a pore diameter of 0.45 µm, thus obtaining a clear liquid E. Furthermore, the hydrolytic condensate was adjusted to reach a volume mean size of 3.8 nm as measured by dynamic light scattering measurement. Nitric acid was mixed to give a pH = 4.

### Preparation of Coating Liquid F;

An amount of 1 part by mass of methyltrimethoxysilane, 0.145 parts of aluminum nitrate nonahydrate, 1.12 parts by mass of water, 33.0 parts by mass of isopropyl alcohol, 17.6 parts by mass of 1-methoxy-2-propanol, and nitric acid were mixed and stirred, thus obtaining a coating liquid F. In doing so, hydrolysis and condensation reactions of methyltrimethoxysilane were promoted to grow the size of a hydrolytic condensate and the emulsified liquid was passed through a filter with a pore diameter of 0.45 µm, thus obtaining a clear liquid F. Furthermore, the hydrolytic condensate was adjusted to reach a volume mean size of 3.8 nm as measured by dynamic light scattering measurement. Nitric acid was mixed to give a pH = 4.

### Preparation of Coating Liquid G;

An amount of 1 part by mass of tetraethoxysilane, 0.342 parts by mass of n-octyltriethoxysilane, 0.413 parts by mass of water, 39.2 parts by mass of isopropyl alcohol, and nitric acid were mixed and stirred, thus obtaining a coating liquid G. In doing so, hydrolysis and condensation reactions of tetraethoxysilane and n-octyltriethoxysilane were promoted to grow the size of a hydrolytic condensate to a volume mean size of 1.8 nm as measured by dynamic light scattering measurement. Nitric acid was mixed to give a pH = 4. The concentration of solid (heating residual) in the obtained coating liquid G was 1.2% by mass.

### (Example 1)

The coating liquid A was spray coated onto a principal surface of the glass substrate A, thus forming a film-bearing glass substrate. The amount of liquid applied by spray coating (the spread thereof sprayed) per unit area was 123.3 g/m². Furthermore, a two-fluid spray gun was used and the distance of the gun was 65 mm. The air pressure was 0.2 MPa and the discharge rate of the liquid was 0.2 kg/h.

Next, the obtained film-bearing glass substrate was put into a hot air furnace and the temperature was increased from room temperature to 350°C over 0.5 hours and then held at 350°C for 30 minutes. Thereafter, the temperature was decreased. Thus, a cooker top plate was obtained in which a coating film was formed on the principal surface of the glass substrate.

### (Examples 2 to 21 and Comparative Examples 1 to 8)

Cooker top plates were obtained in the same manner as in Example 1 except that the type of the glass substrate, the type of the coating liquid, the application method, and the conditions were changed as shown in Table 1 below. In Examples 9 and 14, a film-bearing glass substrate was made, not by spray coating, but by dip coating at a dip withdrawal speed of 0.5 mm/sec. In Comparative Examples 1 and 2, a glass substrate was used directly as a cooker top plate.

### [Evaluations]

### (Film Thickness)

The cooker top plates obtained in Examples 1 to 21 (Ex. 1 to Ex. 21) and Comparative Examples 1 to 8 (CEx. 1 to CEx. 8) were measured in terms of spectral reflectance with a microscopic spectroscope (item code "USPM-RU" manufactured by Olympus) and the thicknesses of their coating films were determined at a refractive index of coating film of 1.4.

### (Arithmetic Mean Height Sa)

The cooker top plates obtained in Examples 1 to 21 and Comparative Examples 1 to 8 were evaluated in terms of arithmetic mean height Sa in conformity with ISO 25178.

Specifically, each cooker top plate was measured with a white light interference microscope ("VertScan (model: R5300GL-A150-AC)" manufactured by Ryoka Systems Inc., objective lens: magnifying power of 20, lens tube: 1 × body, zoom lens: no relay, size of measurement view field: 316.77 µm × 237.72 µm, resolution: 640 pixels × 480 pixels, measurement mode: phase mode, wavelength filter: 520 nm, CCD camera: Sony HR-57 1/2), bad pixels after the measurement were interpolated, a first-order plane correction was performed, and the arithmetic mean height Sa of the surface of the coating film was measured.

### (Pencil Hardness)

The cooker top plates obtained in Examples 1 to 21 and Comparative Examples 1 to 8 were evaluated in terms of pencil hardness in conformity with JIS K5600-5-4:1999.

### (Contact Angle)

The cooker top plates obtained in Examples 1 to 21 and Comparative Examples 1 to 8 were evaluated in terms of contact angle θ based on the sessile drop method (half-angle fitting method) defined in JIS R 3257:1999. Specifically, using a contact angle meter ("DropMaster DMe-200" manufactured by Kyowa Interface Science Co., Ltd.), 3 µL of pure water was dropped onto each horizontally placed cooker top plate and the contact angle was measured.

### (Appearance)

The appearance (degree of cloudiness) of each of the cooker top plates obtained in Examples 1 to 21 and Comparative Examples 1 to 8 was evaluated by a change from the appearance of an associated uncoated glass substrate. Specifically, under an environment specified in terms of illuminance, the appearance was visually evaluated, based on the evaluation criteria below, on three scales: "clouding is totally unnoticeable", "clouding is unnoticeable", and "clouding is slightly noticeable".

### <Evaluation Criteria>

"Clouding is slightly noticeable" ... a difference is recognizable in comparison under an environment of 100 lux.

"Clouding is unnoticeable" ... almost no difference is recognizable in comparison under an environment of 100 lux.

"Clouding is totally unnoticeable" ... almost no difference is recognizable in comparison under an environment of 100 lux and even in comparison under an environment of 300 lux.

### (Char Sticking Area Ratio)

Respective samples for char sticking evaluation were made on the cooker top plates obtained in Examples 1 to 21 and Comparative Examples 1 to 8 and, for each sample, the ratio of the area of char sticking portions (the char sticking area ratio) on the surface of the coating film was determined.

Each sample for char sticking evaluation was made by dropping 1 mL of grilled meat sauce (trade name "Gokuuma Yakiniku-no-tare Amakuchi" manufactured by Ebara Foods Industry, Inc.) as an evaluation liquid onto the surface of the coating film and heating it at 250°C for 30 minutes.

An image of the sample for char sticking evaluation was taken from the side of the glass substrate opposite to the coating film by a camera (a monochrome camera acA2440-35um manufactured by Basler AG) and the char sticking area ratio was determined from the area ratio of char sticking portions of the obtained image to the entire region where the sample for char sticking evaluation was provided. Taking the image by the camera was conducted under conditions of 16-mm lens focal length, F NO 2.8, and WD 350 mm while the glass substrate was illuminated with light by a white LED planar illumination device. Furthermore, taking the image by the camera was conducted with the camera inclined at an angle θ of 4 degrees to the direction orthogonal to the reverse side of the glass substrate.

The results are shown in Tables 1 and 2 below.

**[Table 1]**

| | Base Material | Coating Liquid | Application Method | Spread of Liquid Sprayed (g/m²) | Dip Withdrawal Speed (mm/sec) | Firing Temperature | Film Thickness (nm) | Arithmetic Mean Height Sa (nm) | Pure Water Contact Angle (degrees) | Pencil Hardness | Char Sticking Area Ratio (%) | Appearance |
|---|---|---|---|---|---|---|---|---|---|---|---|---|
| Ex. 1 | Glass substrate A | Liquid A | Spray coating | 123.3 | - | 350°C | 55 | 15.92 | 90.1 | 8H | < 1 | Clouding is slightly noticeable |
| Ex. 2 | Glass substrate A | Liquid A | Spray coating | 41.1 | - | 350°C | 24 | 5.70 | 90.1 | 29H | 9 | Clouding is unnoticeable |
| Ex. 3 | Glass substrate A | Liquid A | Spray coating | 24.6 | - | 350°C | 18 | 6.02 | 91.9 | 29H | 6 | Clouding is unnoticeable |
| Ex. 4 | Glass substrate A | Liquid A | Spray coating | 12.3 | - | 350°C | 10 | 2.33 | 92.1 | 29H | 9 | Clouding is totally unnoticeable |
| Ex. 5 | Glass substrate B | Liquid A | Spray coating | 123.3 | - | 350°C | 55 | 18.78 | 82.4 | 8H | < 1 | Clouding is slightly noticeable |
| Ex. 6 | Glass substrate B | Liquid A | Spray coating | 41.1 | - | 350°C | 24 | 6.65 | 82.5 | 29H | 6 | Clouding is unnoticeable |
| Ex. 7 | Glass substrate B | Liquid A | Spray coating | 24.6 | - | 350°C | 18 | 5.44 | 82.3 | 29H | 3 | Clouding is unnoticeable |
| Ex. 8 | Glass substrate B | Liquid A | Spray coating | 12.3 | - | 350°C | 10 | 2.46 | 80.5 | 29H | 6 | Clouding is totally unnoticeable |
| Ex. 9 | Glass substrate A | Liquid A | Dip coating | - | 0.5 | 350°C | 16 | 0.42 | 90.3 | 29H | 11 | Clouding is totally unnoticeable |
| Ex. 10 | Glass substrate A | Liquid B | Spray coating | 24.6 | - | 350°C | 18 | 0.53 | 85.6 | 29H | 53 | Clouding is totally unnoticeable |
| Ex. 11 | Glass substrate A | Liquid B | Spray coating | 12.3 | - | 350°C | 10 | 0.54 | 84.8 | 29H | 40 | Clouding is totally unnoticeable |
| Ex. 12 | Glass substrate B | Liquid B | Spray coating | 24.6 | - | 350°C | 18 | 0.70 | 82.2 | 29H | 10 | Clouding is totally unnoticeable |
| Ex. 13 | Glass substrate B | Liquid B | Spray coating | 12.3 | - | 350°C | 10 | 0.49 | 81.0 | 29H | 9 | Clouding is totally unnoticeable |
| Ex. 14 | Glass substrate A | Liquid B | Dip coating | - | 0.5 | 350°C | 14 | 0.89 | 92.0 | 29H | 12 | Clouding is totally unnoticeable |
| Ex. 15 | Glass substrate A | Liquid C | Spray coating | 24.6 | - | 350°C | 17 | 4.03 | 94.7 | 29H | 3 | Clouding is totally unnoticeable |

**[Table 2]**

| | Base Material | Coating Liquid | Application Method | Spread of Liquid Sprayed (g/m²) | Dip Withdrawal Speed (mm/sec) | Firing Temperature | Film Thickness (nm) | Arithmetic Mean Height Sa (nm) | Pure Water Contact Angle (degrees) | Pencil Hardness | Char Sticking Area Ratio (%) | Appearance |
|---|---|---|---|---|---|---|---|---|---|---|---|---|
| Ex. 16 | Glass substrate B | Liquid C | Spray coating | 24.6 | - | 350°C | 17 | 3.93 | 83.7 | 29H | - | Clouding is totally unnoticeable |
| Ex. **17** | Glass substrate A | Liquid D | Spray coating | 24.6 | - | 350°C | 18 | 10.64 | 92.8 | 29H | < 1 | Clouding is unnoticeable |
| Ex. 18 | Glass substrate B | Liquid D | Spray coating | 24.6 | - | 350°C | 17 | 10.08 | 83.6 | 29H | < 1 | Clouding is unnoticeable |
| Ex. 19 | Glass substrate A | Liquid E | Spray coating | 24.6 | - | 350°C | 16 | 6.76 | 97.5 | 29H | < 1 | Clouding is unnoticeable |
| Ex. 20 | Glass substrate A | Liquid F | Spray coating | 24.6 | - | 350°C | 18 | 5.19 | 97.6 | 29H | < 1 | Clouding is unnoticeable |
| Ex. 21 | Glass substrate A | Liquid F | Spray coating | 12.3 | - | 350°C | 10 | 2.18 | 96.8 | 29H | < 1 | Clouding is totally unnoticeable |
| Comp. Ex. 1 | Glass substrate A | - | - | - | - | - | - | 0.30 | < 5 | 29H | 87 | Clouding is totally unnoticeable |
| Comp. Ex. 2 | Glass substrate B | - | - | - | - | - | - | 0.26 | < 5 | 29H | 91 | Clouding is totally unnoticeable |
| Comp. Ex. 3 | Glass substrate A | Liquid A | Spray coating | 246.7 | - | 350°C | 133 | 15.28 | 88.9 | <7H | < 1 | Clouding is slightly noticeable |
| Comp. Ex. 4 | Glass substrate B | Liquid A | Spray coating | 246.7 | - | 350°C | 133 | 18.96 | 82.4 | <7H | < 1 | Clouding is slightly noticeable |
| Comp. Ex. 5 | Glass substrate A | Liquid B | Spray coating | 246.7 | - | 350°C | 125 | 1.89 | 67.2 | <7H | 73 | Clouding is totally unnoticeable |
| Comp. Ex. 6 | Glass substrate B | Liquid B | Spray coating | 246.7 | - | 350°C | 120 | 1.72 | 73.7 | <7H | 56 | Clouding is totally unnoticeable |
| Comp. Ex. 7 | Glass substrate B | Liquid G | Spray coating | 24.6 | - | 200°C | 22 | 14.68 | 86.7 | <7H | 19 | Clouding is slightly noticeable |
| Comp. Ex. 8 | Glass substrate B | Liquid G | Spray coating | 24.6 | - | 350°C | - | - | 3.6 | - | 90 | - |

As is obvious from Tables 1 and 2, regarding the cooker top plates in Examples 1 to 15 and 17 to 21 in which a specific coating film was formed on a glass substrate and the thickness thereof was not more than 100 nm, it was confirmed that the char sticking area ratio was small, the sticking char could be easily removed, and the hardness on the coating film side was excellent. Furthermore, regarding the cooker top plates in Examples 1 to 21, it was confirmed that when they underwent a heat resistant test under conditions at 350°C for 24 hours, the change in water contact angle on the surface of the coating film between before and after the heat resistance test was less than 1 degree and, therefore, the heat resistance was increased.

In Comparative Example 7, the pencil hardness was insufficient, the reason for which can be considered that the organo-polysiloxane contained in the coating film had an octyl group (an alkyl group having 8 carbon atoms). In Comparative Example 8, a sufficient non-stick effect could not be obtained, the reason for which can be considered that the octyl groups were decomposed during firing at 350°C. Actually, in Comparative Example 8, the pure water contact angle was small.

### (Example 22 and Comparative Example 9)

Glass substrates A on each of which a dotted patten was printed by screen printing were prepared. Next, under the same conditions as in Examples 3, 15, 19, and 20, coating films were formed on the glass substrates A with a dotted pattern printed. When the portion of each coating film located between dots of the printed dotted pattern was measured in terms of thickness, arithmetic mean height, pure water contact angle, and pencil hardness of the coating film, no significant difference was found from measurement results of a coating film formed on a glass substrate A free of printed dotted pattern. In either example, sticking char of the sample for char sticking evaluation made on the surface could be removed by simply pinching it with fingers.

### [Char Sticking Evaluation Method]

Fig. 12(b) is a photograph for checking the non-stick effect and the removability of sticking char in Example 22 in which a coating film was formed on a dotted pattern-printed glass substrate A under the same conditions as in Example 19. Furthermore, Fig. 13(b) is a photograph for checking the non-stick effect and the removability of sticking char in Comparative Example 9 in which a dotted pattern-printed glass substrate A was used directly (no coating film was formed thereon). Figs. 12(a) and 13(a) show photographs just after sticking chars of the samples for char sticking evaluation were made (photographs before the step of removing the sticking char was performed).

Next, Example 22 and Comparative Example 9 were evaluated in terms of sticking of char. Specifically, each of the dotted pattern-printed glass substrates A was visually observed from the side thereof opposite to the side thereof on which the sticking char was present and portions of the dotted pattern-printed glass substrate A to which char adhered tightly (char sticking portions) were checked. As a result, Example 22 had a smaller area of char sticking portions as compared to Comparative Example 9.

Next, the removability of sticking char was checked. As shown in Fig. 12(b), in Example 22 in which a coating film was formed on a dotted pattern-printed glass substrate A under the same conditions as in Example 19, it can be seen that the sticking char could be removed by pinching it with fingers. On the other hand, as shown in Fig. 13(b), in Comparative Example 9 in which a dotted pattern-printed glass substrate A was used directly, it can be seen that even after a stainless steel scale was rubbed strongly against the sticking char, the sticking char stuck firmly to the glass substrate A.

### [Char Sticking Evaluation Method (Including Imaging Step)]

Hereinafter, a description will be given in further detail of the char sticking evaluation method according to the present invention with reference to specific experimental examples. The present invention is not at all limited by the following experimental examples and can be embodied in appropriately modified forms without changing the gist of the invention.

### Preparation of Glass Substrate A;

As a glass substrate, a clear crystallized glass plate ("N-0" manufactured by Nippon Electric Glass Co., Ltd., average coefficient of linear thermal expansion at 30°C to 380°C: 1 × 10⁻⁷/°C, thickness: 4 mm) was prepared.

### Preparation of Glass Substrate B;

As a glass substrate B, an aluminoborosilicate glass ("OA-11" manufactured by Nippon Electric Glass Co., Ltd., average coefficient of linear thermal expansion at 30°C to 380°C: 37 × 10⁻⁷/°C, thickness: 0.5 mm) was prepared.

### Preparation of Coating Liquid A;

An amount of 1 part by mass of methyltriethoxysilane was mixed with 0.51 parts by mass of water, 36.1 parts by mass of isopropyl alcohol, and nitric acid and the mixture was stirred, thus obtaining a coating liquid A. In doing so, hydrolysis and condensation reactions of methyltriethoxysilane were promoted to grow the size of a hydrolytic condensate to a volume mean size of 1.0 nm as measured by dynamic light scattering measurement. Nitric acid was mixed to give a pH = 4. The concentration of solid (heating residual) in the obtained coating liquid A was 1.0% by mass.

### Preparation of Coating Liquid B;

An amount of 1 part by mass of methyltriethoxysilane was mixed with 0.51 parts by mass of water, 36.1 parts by mass of modified ethanol (containing 82.2% by mass ethanol as a major ingredient, methanol, isopropyl alcohol and so on), and nitric acid and the mixture was stirred, thus obtaining a coating liquid B. In doing so, hydrolysis and condensation reactions of methyltriethoxysilane were promoted to grow the size of a hydrolytic condensate to a volume mean size of 1.0 nm as measured by dynamic light scattering measurement. Nitric acid was mixed to give a pH = 4. The concentration of solid (heating residual) in the obtained coating liquid B was 1.0% by mass.

### Plate-Shaped Material A;

The prepared glass substrate A was used directly as a plate-shaped material.

### Plate-Shaped Material B;

The coating liquid B was spray coated onto a principal surface of the glass substrate A, thus forming a film-bearing glass substrate. The amount of liquid applied by spray coating (the spread thereof sprayed) per unit area was 24.6 g/m². Furthermore, a two-fluid spray gun was used and the distance of the gun was 65 mm. The air pressure was 0.2 MPa and the discharge rate of the liquid was 0.2 kg/h.

Next, the obtained film-bearing glass substrate was put into a hot air furnace and the temperature was increased from room temperature to 350°C over 0.5 hours and then held at 350°C for 30 minutes. Thereafter, the temperature was decreased. Thus, a plate-shaped material B was obtained as a cooker top plate in which a coating film was formed on the principal surface of the glass substrate.

### Plate-Shaped Materials C to F;

Plate-shaped materials C to F as cooker top plates were obtained in the same manner as for the plate-shaped material B except that the application conditions were changed as shown in Table 3 below. As for the plate-shaped material C, a film-bearing glass substrate was made, not by spray coating, but by dip coating at a dip withdrawal speed of 0.5 mm/sec.

**[Table 3]**

| | Base Material | Coating Liquid | Application Method | Spread of Liquid Sprayed (g/m²) | Dip Withdrawal Speed (mm/sec) | Coating Film Thickness (nm) |
|---|---|---|---|---|---|---|
| Plate-shaped material A | Glass substrate A | - | - | - | - | - |
| Plate-shaped material B | Glass substrate A | Liquid B | Spray coating | 24.6 | - | 18 |
| Plate-shaped material C | Glass substrate A | Liquid B | Dip Coating | - | 0.5 | 14 |
| Plate-shaped material D | Glass substrate A | Liquid A | Spray coating | 12.3 | - | 10 |
| Plate-shaped material E | Glass substrate A | Liquid A | Spray coating | 24.6 | - | 18 |
| Plate-shaped material F | Glass substrate A | Liquid A | Spray coating | 123.3 | - | 55 |

### (Experimental Examples 1 to 6)

The plate-shaped materials A to F were evaluated in terms of sticking of char. Specifically, first, 1 mL of grilled meat sauce (manufactured by Ebara Foods Industry, Inc.) as an evaluation liquid was dropped onto a first principal surface of each of the plate-shaped materials and heated at 250°C for 30 minutes, thus making a sample for char sticking evaluation on the first plate-shaped material of each of the plate-shaped materials. As for the plate-shaped material A, one principal surface of the glass substrate was used as the first principal surface. As for the plate-shaped materials B to F, the surface thereof on which the coating film was provided was used as the first principal surface.

Next, an image of each of the samples for char sticking evaluation was taken from the second principal surface side of the plate-shaped material by a camera (a monochrome camera acA2440-35um manufactured by Basler AG), thus obtaining an 8-bit grayscale image. Taking the image by the camera was conducted using the bright-field illumination method under conditions of 16-mm lens focal length, F NO 2.8, and WD 350 mm while the plate-shaped material was illuminated with light by a white LED planar illumination device. Furthermore, taking the image by the camera was conducted with the camera inclined at an angle θ of 4 degrees to the direction orthogonal to the second principal surface of the plate-shaped material.

Next, regarding the image of the sample for char sticking evaluation taken by the camera, the area of char sticking portions and the area of char non-sticking portions were measured using image analysis software (item code "HALCON 18" manufactured by MVTec Software GmbH). Furthermore, the char sticking area ratio was determined from the ratio of the area of char sticking portions of the image to the area of the entire region thereof where the sample for char sticking evaluation was provided.

The analysis using the image analysis software was performed in the following manner.

First, the contrast of the image as it had been taken was corrected. Specifically, a first-order gray value plane was generated to fit to a portion of the shot image around the entire region where the sample for char sticking evaluation was provided, and the gray value of each of the pixels of the original image was corrected to give a gray value g of 128.g1/g2 where g1 represents the gray value of each pixel of the original image and g2 represents the gray value of each pixel of the generated gray value plane, thus creating a corrected image.

Next, the corrected image was subjected to threshold processing to extract a region R1 having a gray value of not more than 100 or not less than 160, and the region R1 was assumed to be an entire region where the evaluation sample was provided. In doing so, the region was appropriately subjected to opening processing and closing processing to become a region where the shape of the boundary was smooth. Furthermore, with the analysis range narrowed to the extracted region R1, the corrected image was subjected to threshold processing again to extract regions R2 of char sticking portions having a gray value of not more than 100. The ratio between the area (number of pixels) of the region R1 and the area (number of pixels) of the regions R2 was calculated to obtain the ratio of the area (the regions R2) of char sticking portions relative to the area (the region R1) of the entire region where the sample for char sticking evaluation was provided and the obtained ratio was adopted as the char sticking area ratio.

Furthermore, the samples for char sticking evaluation made in the experimental examples underwent a test for the peelability of char. The test for the peelability of char was conducted by poking the sample for char sticking evaluation with a pen and the peelability was determined based on the following evaluation criteria. In the following evaluation criteria, the greater the number, the less the char is peelable.

### <Evaluation Criteria>

1: A whole mass of char peeled off with a light touch of a pen to the mass of char.
2: A whole mass of char peeled off with a light push of a pen on the mass of char.
3: A whole mass of char peeled off with a hard push of a pen on the mass of char.
4: A mass of char partly peeled off while being broken with a hard push of a pen on the mass of char. The whole mass of char peeled off with repeatedly hard pushes of the pen on the rest of the mass.
5: A mass of char was only partly broken even with a hard push of a pen on the mass of char. The whole mass of char could not be peeled off.

The results are shown in Table 4 below.

**[Table 4]**

| | Plate-Shaped Material | Char Sticking Area Ratio (%) | Peelability of Char |
|---|---|---|---|
| Experimental Example 1 | Plate-shaped material A | 87 | 5 |
| Experimental Example 2 | Plate-shaped material B | 53 | 4 |
| Experimental Example 3 | Plate-shaped material C | 12 | 3 |
| Experimental Example 4 | Plate-shaped material D | 9 | 3 |
| Experimental Example 5 | Plate-shaped material E | 6 | 2 |
| Experimental Example 6 | Plate-shaped material F | <1 | 1 |

As is obvious from Table 4, it was confirmed that the smaller the char sticking area ratio determined by the test for char sticking evaluation, the more the char was peelable.

### (Experimental Examples 7 and 8)

Next, a plate-shaped material G including a glass substrate A as a base material and a coating film containing an organo-polysiloxane and a plate-shaped material H including a glass substrate B and a coating film containing an organo-polysiloxane were prepared and underwent the same test for char sticking evaluation as in Experimental examples 1 to 6 six times, thus obtaining their respective char sticking area ratios. Furthermore, the standard deviation and the standard error of the six char sticking area ratios for each plate-shaped material were determined.

The results are shown in Table 5 below.

**[Table 5]**

| | | Experimental Example 7 | Experimental Example 8 |
|---|---|---|---|
| Plate-Shaped Material | | Plate-shaped material G | Plate-shaped material H |
| | 1st | 16.91% | 5.62% |
| | 2nd | 21.51% | 5.03% |
| | 3rd | 16.30% | 8.48% |
| | 4th | 17.30% | 8.61% |
| | 5th | 19.29% | 4.85% |
| Char Sticking Area Ratio | 6th | 19.19% | 6.06% |
| | Average | 18.42% | 6.44% |
| | Sample standard deviation | 1.77% | 1.54% |
| | Unbiased standard deviation | 1.94% | 1.68% |
| | Standard error | 0.79% | 0.69% |
| | 2×standard error | 1.59% | 1.38% |

As is obvious from Table 5, the char sticking area ratios measured by the test for char sticking evaluation in Experimental examples 7 and 8 were small and sufficiently small also in the aspect of the value of 2 × standard error corresponding to the 95% confidence interval. As seen from this, it was confirmed that, according to the char sticking evaluation method in Experimental examples 7 and 8, the removability of sticking char on the plate-shaped material can be reliably evaluated with less variation depending on the evaluator.

### [Reference Signs List]

- 1, 21, 31: cooker top plate
- 1a, 21a, 31a: cooking surface
- 2: glass substrate
- 2a, 3a: surface
- 2b: reverse side
- 3: coating film
- 10: sticking char
- 11: sample for char sticking evaluation
- 12: camera
- 13: lamp
- 22: light-shielding layer
- 23: heat-resistant resin layer
- 32: printed layer
- 41: plate-shaped material
- 41a: first principal surface
- 41b: second principal surface
- 42: evaluation liquid
- 51: sample for char sticking evaluation
- 52: camera
- 53: lamp
- 54: char sticking portion
- 55: char non-sticking portion
- 56: region

## Claims

1. A cooker top plate comprising:
a glass substrate; and
a coating film that is provided on a principal surface of the glass substrate and contains an organo-polysiloxane having a trifunctional siloxane unit represented by formula (1) below,
wherein the coating film has a three-dimensional cross-linked structure containing a siloxane bond and a thickness of not more than 100 nm. 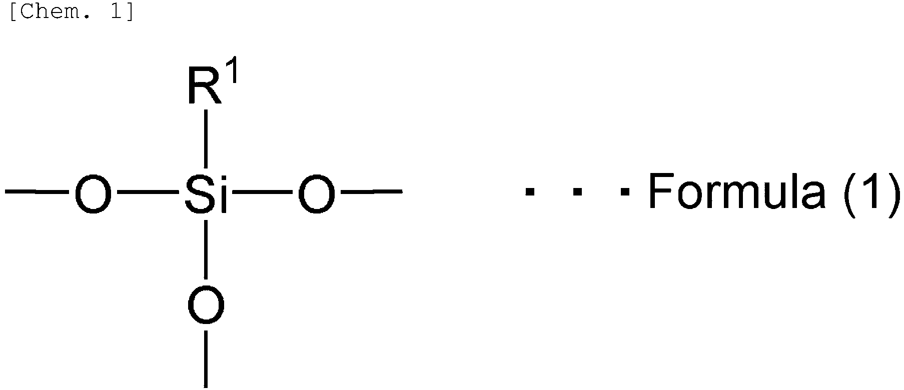 in the formula (1), R¹ represents an alkyl group having 1 to 6 carbon atoms, a phenyl group or a vinyl group.

2. The cooker top plate according to claim 1, wherein a surface of the coating film has an arithmetic mean height Sa of not less than 0.4 nm and not more than 10 nm measured with a size of a measurement view field of 316.77 µm × 237. 72 µm and a resolution of 640 pixels × 480 pixels.

3. The cooker top plate according to claim 1 or 2, wherein a water contact angle of a surface of the coating film is not less than 80 degrees.

4. The cooker top plate according to claim 1 or 2, wherein the glass substrate is made of a borosilicate glass or a low-expansion crystallized glass.

5. The cooker top plate according to claim 1 or 2, wherein the glass substrate has an average coefficient of linear thermal expansion of not more than 40 × 10⁻⁷/°C at 30°C to 380°C.

6. The cooker top plate according to claim 1 or 2, wherein the coating film contains a hydrolytic condensate of a trifunctional alkoxide represented by the following formula (2): 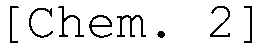 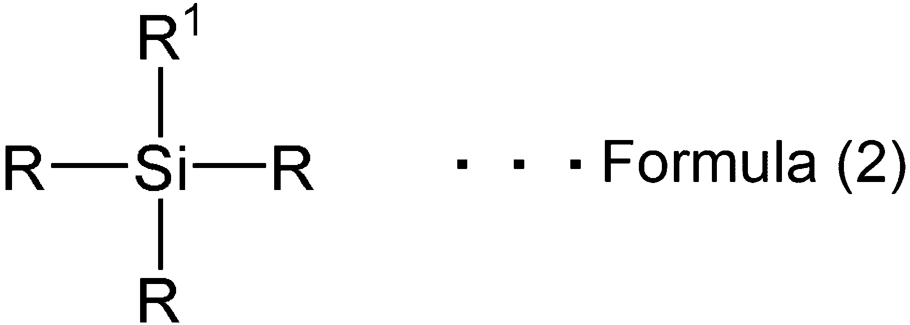 in the formula (2), R¹ represents an alkyl group having 1 to 6 carbon atoms, a phenyl group or a vinyl group and R represents an alkoxy group.

7. The cooker top plate according to claim 6, wherein the R¹ of a compound represented by the formula (2) is a methyl group.

8. The cooker top plate according to claim 1 or 2, wherein a pencil hardness of the cooker top plate measured from a side thereof where the coating film is located is not less than 9H.

9. The cooker top plate according to claim 1 or 2, wherein when a sample for char sticking evaluation is made by dropping an evaluation liquid onto a surface of the coating film and heating the liquid and an image of the sample for char sticking evaluation is taken from a side of the glass substrate opposite to the coating film, an area ratio of a char sticking portion determined from the taken image is not more than 70%.

10. The cooker top plate according to claim 1 or 2, wherein when the cooker top plate undergoes a heat resistance test under conditions at a temperature of 350°C for 24 hours, a change in water contact angle of a surface of the coating film between before and after the heat resistance test is less than three degrees.

11. The cooker top plate according to claim 1 or 2, wherein a surface of the cooker top plate located on a side thereof having the coating film is a cooking surface on which a cooking utensil is to be placed.

12. The cooker top plate according to claim 1 or 2, wherein
a printed layer having a pattern is provided on the principal surface of the glass substrate, and
the coating film is provided to cover the printed layer on the principal surface of the glass substrate.

13. The cooker top plate according to claim 12, wherein the pattern is a dotted, grid, striped or ring-shaped pattern.

14. A method for producing a cooker top plate comprising a glass substrate and a coating film provided on a principal surface of the glass substrate, the method comprising the steps of:
applying, to the principal surface of the glass substrate, a coating liquid containing a compound represented by formula (2) below or a hydrolytic condensate in which at least part of the compound is hydrolyzed and condensed; and
firing at a temperature of not lower than 200°C the glass substrate having the coating liquid applied thereto, thus forming the coating film on the principal surface of the glass substrate. 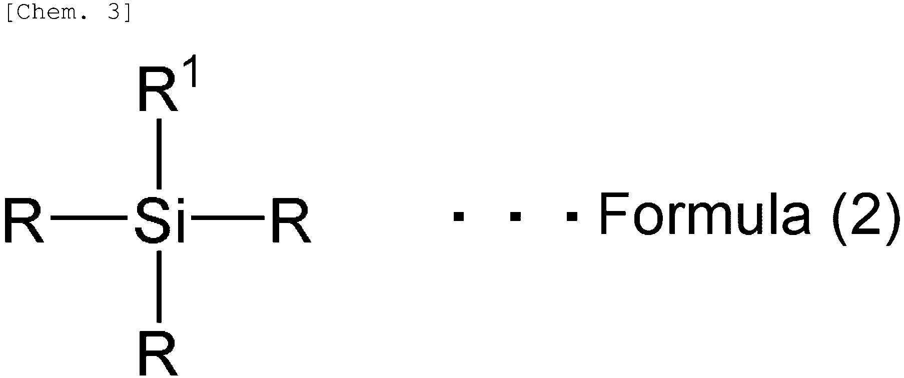
in the formula (2), R¹ represents an alkyl group having 1 to 6 carbon atoms, a phenyl group or a vinyl group and R represents an alkoxy group.

15. The method for producing a cooker top plate according to claim 14, wherein the R¹ of the compound represented by the formula (2) is a methyl group.

16. A char sticking evaluation method for evaluating removability of sticking char on a plate-shaped material, the method comprising:
a sample making step of preparing a plate-shaped material having a first principal surface and a second principal surface opposed to each other and making a sample for char sticking evaluation on the first principal surface of the plate-shaped material; and
an evaluation step of evaluating removability of sticking char of the sample for char sticking evaluation from a side of the plate-shaped material where the second principal surface is located.

17. The char sticking evaluation method according to claim 16, wherein the evaluation step comprises:
an imaging step of taking an image of the sample for char sticking evaluation from the side of the plate-shaped material where the second principal surface is located; and
a measurement step of measuring, from the image taken in the imaging step, an area of at least one of a char sticking portion and a char non-sticking portion of the sample for char sticking evaluation.

18. The char sticking evaluation method according to claim 16, wherein in the sample making step the sample for char sticking evaluation is made on the first principal surface of the plate-shaped material by dropping an evaluation liquid onto the first principal surface of the plate-shaped material and heating the plate-shaped material with the evaluation liquid dropped thereon.

19. The char sticking evaluation method according to claim 17, wherein in the imaging step the image of the sample for char sticking evaluation is taken from the side of the plate-shaped material where the second principal surface is located by bright-field illumination method.

20. The char sticking evaluation method according to claim 17, wherein in the measurement step an area of an entire region where the sample for char sticking evaluation is provided is measured from the image taken in the imaging step.

21. The char sticking evaluation method according to claim 18, wherein in the sample making step, before heating the plate-shaped material after dropping the evaluation liquid onto the plate-shaped material, an area of an entire region where the sample for char sticking evaluation is provided is measured by measuring an area of the evaluation liquid dropped.

22. The char sticking evaluation method according to claim 17, wherein in the measurement step a char sticking area ratio is determined as a ratio of the area of the char sticking portion to an area of an entire region where the sample for char sticking evaluation is provided.

23. The char sticking evaluation method according to claim 22, wherein in the measurement step whether the plate-shaped material is a non-defective product or a defective product is determined from the char sticking area ratio.

24. A cooker top plate having a char sticking area ratio of not more than 70% determined by the char sticking evaluation method according to any one of claims 16 to 23.

## Amended claims

### Amended claims under Art. 19.1 PCT

1. A cooker top plate comprising:
a glass substrate; and
a coating film that is provided on a principal surface of the glass substrate and contains an organo-polysiloxane having a trifunctional siloxane unit represented by formula (1) below,
wherein the coating film has a three-dimensional cross-linked structure containing a siloxane bond and a thickness of not more than 100 nm. 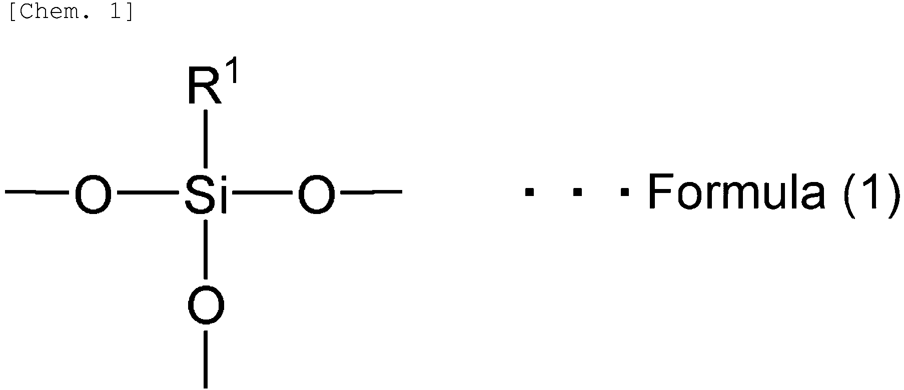 in the formula (1), R¹ represents an alkyl group having 1 to 6 carbon atoms, a phenyl group or a vinyl group.

2. The cooker top plate according to claim 1, wherein a surface of the coating film has an arithmetic mean height Sa of not less than 0.4 nm and not more than 10 nm measured with a size of a measurement view field of 316.77 µm × 237. 72 µm and a resolution of 640 pixels × 480 pixels.

3. The cooker top plate according to claim 1 or 2, wherein a water contact angle of a surface of the coating film is not less than 80 degrees.

4. The cooker top plate according to any one of claims 1 to 3, wherein the glass substrate is made of a borosilicate glass or a low-expansion crystallized glass.

5. The cooker top plate according to any one of claims 1 to 4, wherein the glass substrate has an average coefficient of linear thermal expansion of not more than 40 × 10⁻⁷/°C at 30°C to 380°C.

6. The cooker top plate according to any one of claims 1 to 5, wherein the coating film contains a hydrolytic condensate of a trifunctional alkoxide represented by the following formula (2): 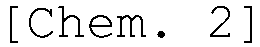 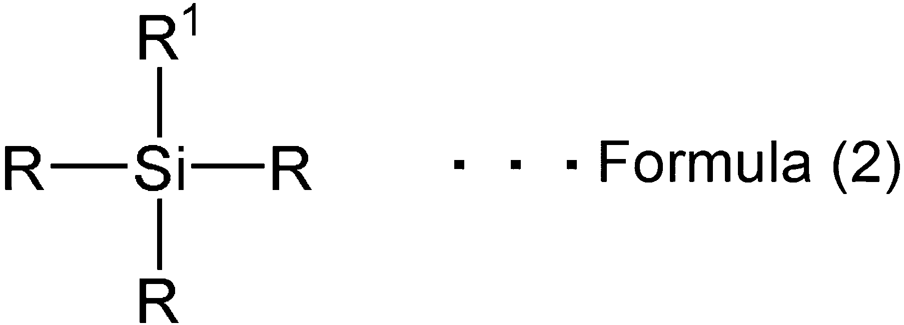 in the formula (2), R¹ represents an alkyl group having 1 to 6 carbon atoms, a phenyl group or a vinyl group and R represents an alkoxy group.

7. The cooker top plate according to claim 6, wherein the R¹ of a compound represented by the formula (2) is a methyl group.

8. The cooker top plate according to any one of claims 1 to 7, wherein a pencil hardness of the cooker top plate measured from a side thereof where the coating film is located is not less than 9H.

9. The cooker top plate according to any one of claims 1 to 8, wherein when a sample for char sticking evaluation is made by dropping an evaluation liquid onto a surface of the coating film and heating the liquid and an image of the sample for char sticking evaluation is taken from a side of the glass substrate opposite to the coating film, an area ratio of a char sticking portion determined from the taken image is not more than 70%.

10. The cooker top plate according to claims 1 to 9, wherein when the cooker top plate undergoes a heat resistance test under conditions at a temperature of 350°C for 24 hours, a change in water contact angle of a surface of the coating film between before and after the heat resistance test is less than three degrees.

11. The cooker top plate according to any one of claims 1 to 10, wherein a surface of the cooker top plate located on a side thereof having the coating film is a cooking surface on which a cooking utensil is to be placed.

12. The cooker top plate according to any one of claims 1 to 11, wherein
a printed layer having a pattern is provided on the principal surface of the glass substrate, and
the coating film is provided to cover the printed layer on the principal surface of the glass substrate.

13. The cooker top plate according to claim 12, wherein the pattern is a dotted, grid, striped or ring-shaped pattern.

14. A method for producing a cooker top plate comprising a glass substrate and a coating film provided on a principal surface of the glass substrate, the method comprising the steps of:
applying, to the principal surface of the glass substrate, a coating liquid containing a compound represented by formula (2) below or a hydrolytic condensate in which at least part of the compound is hydrolyzed and condensed; and
firing at a temperature of not lower than 200°C the glass substrate having the coating liquid applied thereto, thus forming the coating film on the principal surface of the glass substrate. 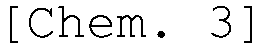 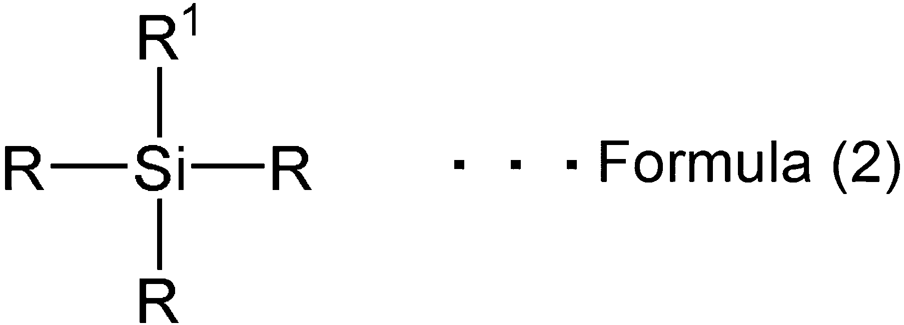 in the formula (2), R¹ represents an alkyl group having 1 to 6 carbon atoms, a phenyl group or a vinyl group and R represents an alkoxy group.

15. The method for producing a cooker top plate according to claim 14, wherein the R¹ of the compound represented by the formula (2) is a methyl group.

16. A char sticking evaluation method for evaluating removability of sticking char on a plate-shaped material, the method comprising:
a sample making step of preparing a plate-shaped material having a first principal surface and a second principal surface opposed to each other and making a sample for char sticking evaluation on the first principal surface of the plate-shaped material; and
an evaluation step of evaluating removability of sticking char of the sample for char sticking evaluation from a side of the plate-shaped material where the second principal surface is located.

17. The char sticking evaluation method according to claim 16, wherein the evaluation step comprises:
an imaging step of taking an image of the sample for char sticking evaluation from the side of the plate-shaped material where the second principal surface is located; and
a measurement step of measuring, from the image taken in the imaging step, an area of at least one of a char sticking portion and a char non-sticking portion of the sample for char sticking evaluation.

18. The char sticking evaluation method according to claim 17, wherein in the measurement step a char sticking area ratio is determined as a ratio of the area of the char sticking portion to an area of an entire region where the sample for char sticking evaluation is provided.

19. The char sticking evaluation method according to claim 18, wherein in the measurement step whether the plate-shaped material is a non-defective product or a defective product is determined from the char sticking area ratio.

20. A cooker top plate having a char sticking area ratio of not more than 70% determined by the char sticking evaluation method according to any one of claims 16 to 19.
